# EUROPÄISCHE PATENTSCHRIFT

(11) **EP 3 766 341 B1**
(45) Veröffentlichungstag und Bekanntmachung des Hinweises auf die Patenterteilung: **21.06.2023**
(21) Anmeldenummer: 20186233.1
(22) Anmeldetag: 16.07.2020
(51) Int. Cl.: A01K 63/00, A01K 63/04

(54) **GEWÄSSERVORRICHTUNG, ZUR ZUMINDEST TEMPORÄREN ANSIEDLUNG UND/ODER BEHERBERGUNG VON AMPHIBIEN**
WATER DEVICE, FOR AT LEAST THE TEMPORARY SETTLEMENT AND/OR SHELTER OF AMPHIBIANS
DISPOSITIF AQUATIQUE DESTINÉ À LA COLONISATION ET/OU L'HÉBERGEMENT AU MOINS TEMPORAIRE D'AMPHIBIENS

(30) Priorität: 19.07.2019 DE 102019119649
(43) Veröffentlichungstag der Anmeldung: 20.01.2021
(73) Patentinhaber: Trautner, Jürgen, 72631 Aichtal (DE)
(72) Erfinder: Trautner, Jürgen, 72631 Aichtal (DE); Rall, Sebastian, 92224 Amberg (DE); Hermann, Gabriel, 71157 Hildrizhausen (DE)
(74) Vertreter: Hafner & Kohl PartmbB

(56) Entgegenhaltungen:
- JP-A- S58 133 808
- US-A- 5 584 991
- US-A- 6 041 738
- ST: "Eine Kinderstube für den Krötennachwuchs", Tagblatt , 10. Mai 2019 (2019-05-10), XP055755421, Gefunden im Internet: URL:https://www.tagblatt.de/Nachrichten/Ei ne-Kinderstube-fuer-den-Kroetennachwuchs-4 14187.html [gefunden am 2020-12-01]

## Beschreibung

US5584991A offenbart ein Teich für Fische, mit einer Deckschicht aus EPDM. XP055755421 offenbart eine aus Trinkwasserasphalt modellierte Kinderstube für den Krötennachwuchs.

Die Erfindung betrifft eine Gewässervorrichtung, zur zumindest temporären Ansiedlung und/oder Beherbergung von Amphibien. Die Gewässervorrichtung soll es Amphibien ermöglichen die Gewässervorrichtung zumindest temporär zu bewohnen bzw. für Amphibien ein von diesen geeignetes und/oder bevorzugtes Habitat zu bilden, insbesondere zur Reproduktion.

Der Erfindung liegt die Aufgabe zugrunde, eine Gewässervorrichtung anzugeben, welche insbesondere im Hinblick auf eine einfache und schnelle sowie kostengünstige Herstellung und/oder einen wartungsarmen bzw. wirtschaftlichen Betrieb es ermöglicht, Amphibien in der Gewässervorrichtung anzusiedeln und/oder zu beherbergen bzw. für diese ein geeignetes und/oder bevorzugtes Habitat zu bilden, insbesondere zur Reproduktion.

Die Aufgabe wird durch eine Gewässervorrichtung zur zumindest temporären Ansiedlung und/oder Beherbergung von Amphibien gemäß Anspruch 1 gelöst. Die hierzu abhängigen Ansprüche betreffen mögliche Ausführungsformen der Gewässervorrichtung.

Die Erfindung betrifft eine Gewässervorrichtung, zur zumindest temporären Ansiedlung und/oder Beherbergung von Amphibien umfassend eine zur Aufnahme von Wasser eingerichtete und mit wenigstens einer Aufnahmewandung ein Aufnahmevolumen definierende Aufnahmewanne, wobei die Aufnahmewanne zumindest abschnittsweise, insbesondere vollflächig, einen schichtartigen Aufbau aufweist, wobei wenigstens eine erste Schicht zumindest abschnittsweise aus einem Gussasphalt gebildet ist, insbesondere weist der Gussasphalt einen thermoplastischen Materialbestandteil und/oder einen Anteil an Bitumen von 2 bis 40 Masse-%, bevorzugt von 3 bis 30 Masse-%, besonders bevorzugt von 4 bis 20 Masse-% auf. Durch die Verwendung von zumindest abschnittsweise Gussasphalt verwendenden Material zur Bildung der Aufnahmewanne, kann eine wirtschaftliche und langlebige Gewässervorrichtung erreichet werden, die zugleich einen geeigneten und bevorzugten Lebens- und Fortpflanzungsraum für die Zieltierarten und/oder Zieltiere darstellen kann.

Die Gewässervorrichtung kann beispielsweise ein Stillgewässer bzw. ein stehendes Gewässer sein, d. h. es ist ein Gewässer, in dem keine oder nur eine geringfügige Fließgeschwindkeit vorhanden ist. Die geringfügige Fließgeschwindigkeit kann aus einem nur geringfügigen Zulauf von Wasser in und entsprechend geringen Ablauf von Wasser aus dem Gewässer resultieren. Im Fall, dass die Gewässervorrichtung keinen Zulauf von Wasser, z. B. über eine Zulaufleitung, z. B. einem Wasser zuführenden Bach aufweist, ist es vorteilhaft, im Nahbereich, insbesondere unmittelbar an den Randbereich der Aufnahmewanne eine für Fahrzeuge, insbesondere für Nutzfahrzeuge, befahrbare Flächen vorzusehen. In diesem Fall kann es beispielsweise ermöglicht werden, durch ein mit einem Wassertank versehenen Fahrzeug nahe an die Gewässervorrichtung bzw. nahe an die Aufnahmewanne heranzufahren, um komfortabel eine Befüllung der Aufnahmewanne mit Wasser vorzunehmen.

Die Gewässervorrichtung kann z. B. als Amphibienlaichgewässer mit insbesondere dauerhaftem Pioniercharakter ausgestaltet sein, der dauerhafte Pioniercharakter lässt sich dabei durch das periodische Befüllen und Ablassen des in der Aufnahmewanne zu platzierenden Wassers erreichen.

Die Gewässervorrichtung kann zumindest abschnittsweise aus einem natürlichen Wasserbecken bestehen und/oder zumindest abschnittsweise, insbesondere vollständig, als künstliches Wasser aufnehmendes Becken bzw. Wanne ausgebildet sein.

Die Gewässervorrichtung ist auf die Bedürfnisse von Amphibien mit einer engen Gewässerbindung ausgebildet bzw. ausgelegt. Insbesondere kann die Gewässervorrichtung als Lebensraum (insbesondere zur Reproduktion) von Tiere der Gattungen Unken oder Kröten, insbesondere von Tieren, welche der Familie der Bombinatoridae und/oder der Bufonidae zugeordnet werden, dienen bzw. für die Lebensgewohnheiten diese Tierarten ausgelegt sein. Besonders bevorzugt kann die Gewässervorrichtung der Gelbbauchunke (Bombina variegata) oder der Wechselkröte (Bufo viridis) als Lebensraum, insbesondere zur Reproduktion, dienen. Die Ausgestaltung der Gewässervorrichtung, insbesondere die Ausbildung von Hohlräumen und Deckungen für die entsprechenden Zieltiere bzw. Zieltierarten, und/oder die Hinzufügung und das Ablassen von in der Aufnahmewanne der Gewässervorrichtung zu bevorratendem Wasser ist vorteilhafterweise auf die Lebensgewohnheiten und/oder auf die von den oben erwähnten Zieltieren bzw. Zieltierarten bevorzugten Lebensumstände abgestimmt. Bei einer Auslegung einer Gewässervorrichtung für eine Gelbbauchunke und/oder eine Wechselkröte ist zu berücksichtigen, dass diese Tiere hochspezialisierte Pionierlaicher sind. Die prädationsanfälligen Larven können sich nur in frisch entstandenen Rohbodentümpeln sowie in ephemeren, regelmäßig trockenfallenden Pioniergewässern erfolgreich entwickeln. Ferner ist eine Mindestbesonnung der Laichplatze von ca. 5 bis 6 Stunden pro Tag vorteilhaft.

Die Gewässervorrichtung weist eine Aufnahmewanne auf, in welcher Wasser aufnehmbar ist. Sofern hierin der Begriff Wasser verwendet wird, so ist damit allgemein eine Flüssigkeit gemeint, z. B. ein übliches in der Natur vorkommendes Wasser. Das heißt, dass das Wasser Verunreinigungen aufweisen kann. Allgemein ist in diesem Zusammenhang der Begriff Wasser hinsichtlich seiner die Bestandteile der Gewässervorrichtung beschreibenden Eigenschaft mit einer Flüssigkeit gleichzusetzen, d. h z. B., dass die Aufnahmewanne derart ausgestaltet ist, dass diese Wasser bzw. Flüssigkeit aufnehmen und halten kann, beispielsweise weist eine Aufnahmewand der Aufnahmewanne eine wasser- bzw. flüssigkeitsdichte Eigenschaft auf.

Die wenigstens eine Aufnahmewandung der Aufnahmewanne definiert ein Aufnahmevolumen zur Aufnahme von Wasser. Das Aufnahmevolumen kann hierbei ein Fassungsvermögen von 5 bis 1000 m³, bevorzugt von 10 bis 500 m³, besonders bevorzugt von 30 bis 350 m³, höchst bevorzugt von 100 bis 300 m³ Wasser umfassen.

Alternativ oder zusätzlich kann die Aufnahmewandung der Aufnahmewanne derart ausgebildet oder ausgestaltet sein, dass ein Aufnahmevolumen zur Aufnahme von Wasser ein Fassungsvermögen von maximal 500 m³, bevorzugt von maximal 400 m³, besonders bevorzugt von maximal 300 m³, höchst bevorzugt von maximal 280 m³, allerhöchst bevorzugt von maximal 250 m³, Wasser umfasst. Damit weist die Gewässervorrichtung eine Größe auf, welche für die Verwendung als Habitat für Lebewesen, bevorzugt für Amphibien, besonders bevorzugt für Pionieramphibien wie z. B. die Gelbbauchunke oder die Kreuzkörte, vorteilhaft ist. Schließlich wird mit den angegebenen Maximalmaßen des Fassungsvolumens der Gewässervorrichtung beispielsweise ein relativ kleines Bauwerk erzielt, das dennoch von Fahrzeugen temporär befahrbar ausgebildet sein kann, um die Wartungsarbeiten zu vereinfachen. Das Minimalmaß für das Fassungsvermögen der Aufnahmewanne kann beispielsweise 3 m³, bevorzugt 5 m³, besonders bevorzugt 10 m³, höchst bevorzugt 30 m³, betragen.

Insbesondere die Ansiedlung der Amphibien wird durch einen barrierefreien Übertritt der Lebewesen zwischen dem in der Gewässervorrichtung aufgenommenem Wasser bzw. der Aufnahmewanne und dem äußeren Rand und/oder der Umwelt der Gewässervorrichtung ermöglicht. Die Amphibien können damit aus eigener Kraft von außerhalb in die Gewässervorrichtung eindringen und von der Gewässervorrichtung nach außerhalb austreten. Hierbei kann die Barrierefreiheit des Übertritts der Gewässervorrichtung zu der Umgebung auf Amphibien, bevorzugt auf Pionieramphibien besonders bevorzugt auf Unken oder Kröten wie z. B. Gelbbauchunken oder Kreuzkröten, ausgestaltet bzw. eingerichtet sein. Mit anderen Worten ist die Beschaffenheit der Gewässervorrichtung und deren Übergang zu der die Gewässervorrichtung umgebenden Umwelt derart eingerichtet, dass die vorgenannten Lebewesen aus eigener Kraft sich zwischen der Gewässervorrichtung und der Umwelt bewegen können.

Die Aufnahmewanne kann beispielsweise zumindest abschnittsweise, insbesondere vollständig, eine im Wesentlichen trichter- und/oder kegel- und/oder trichterstumpf- und/oder kegelstumpfförmige Form aufweisen. Der Randbereich der Aufnahmewanne kann einen nach außen hin abflachenden Randabschnitt aufweisen.

Über eine einer Ablaufeinrichtung zugeordnete Ablauföffnung kann in der Aufnahmewanne befindliches Wasser zu einem Auslassort abfließen. Der Auslassort kann hierbei beispielsweise beabstandet von der Ablauföffnung angeordnet oder ausgebildet sein. Beispielsweise kann der Abstand des Auslassorts zu der Ablauföffnung wenigstens die Hälfte der geringsten horizontalen Längenerstreckung der Aufnahmewanne betragen, vorzugsweise beträgt der Abstand der Ablauföffnung zu dem Auslassort mindestens die Hälfte der größten horizontalen Längenerstreckung der Aufnahmewanne. Der Auslassort kann z. B. außerhalb einer durch die Aufnahmewanne definierten Fläche liegen. Der Auslassort kann eine gute Versickerungseigenschaft aufweisen und/oder unmittelbar oder mittelbar in ein weiteres Gewässer münden. Hierbei kann der Auslassort über eine Kanalverbindung mit einem weiteren Gewässer, z. B. einem Bach, verbunden sein. Eine auslassortseitige Auslassöffnung kann mit einer Klappe oder anderen Mitteln zur Verhinderung eines Eintretens von Tieren, insbesondere von Fröschen, in die Ablaufleitung versehen sein.

Eine als Überlauf dienende zweite Ablauföffnung bzw. zweite Ablaufeinrichtung kann vorzugsweise von dem Randbereich der Aufnahmewanne beabstandet sein, d. h., dass sich die Ablauföffnung innerhalb des Aufnahmevolumens befindet und/oder erstreckt. Dies hat den Vorteil, dass diese Ablauföffnung durch das diese umgebende Wasser im Zustand der befüllten Aufnahmewanne vor Berührung durch Personen geschützt ist, da diese sich hierfür in das Wasser begeben müssten. Dabei kann es vorgesehen sein, dass die als Überlauf dienende Ablauföffnung einen Abstand zu dem Rand der Aufnahmewanne von mindestens einem Meter, vorzugsweise von mindestens zwei Meter, besonders bevorzugt von mindestens drei Metern aufweist. Alternativ oder zusätzlich kann die als Überlauf dienende Ablauföffnung innerhalb eines zentralen Bereichs der den bestimmungsgemäßen Wasserpegel bildenden Wasseroberfläche angeordnet sein. Der zentrale Bereich kann beispielsweise als die 25 % am zentralsten gelegene Fläche der gesamten Wasseroberfläche definiert werden.

Durch die Ablauföffnung kann ein in der Aufnahmewanne befindliches Wasser überwiegend, insbesondere vollständig, abfließen bzw. abgeleitet werden. Ein vollständiges Abfließen meint dabei, dass nach einem Abfließen kein oder kaum noch Wasser in der Aufnahmewanne vorliegt. Hierzu ist die Ablauföffnung derart positioniert und/oder ausgerichtet, dass ein möglichst vollständiges Ablaufen von in der Aufnahmewanne befindlichem Wasser ermöglicht wird, typischerweise ist die Ablauföffnung hierzu an dem tiefsten Punkt der Aufnahmewanne angeordnet, ferner kann beispielsweise zusätzlich die Aufnahmewanne ein zur Ablauföffnung hin abfallendes Gefälle bzw. Neigung aufweisen.

Die Ablauföffnung ist beispielsweise mit einer Leitungsverbindung, insbesondere einer Rohrleitungsverbindung, mit einer Auslassöffnung der Ablaufeinrichtung verbunden, wobei die Ablauföffnung an dem Auslassort mündet. Hierbei kann beispielsweise es vorgesehen sein, dass die Leitungsverbindung zumindest abschnittsweise, überwiegend oder vollständig unter dem Erdboden und insbesondere zumindest abschnittsweise, überwiegend oder vollständig unter der Aufnahmewandung angeordnet ist bzw. verläuft.

Der Ablaufeinrichtung ist eine wenigstens ein Schließmittel aufweisende Schließeinrichtung zugeordnet, wobei das Schießmittel zwischen einer Verschlussstellung und einer Freigabestellung verlagerbar bzw. verstellbar ist. Die Verstellbarkeit des wenigstens einen Schließmittels kann stufenlos erfolgen. Auch kann das Schließmittel beispielsweise eine Zwischenstellung, d. h. z. B. eine Teiloffenstellung, einnehmen.

Die Schließeinrichtung kann beispielsweise als Absperrorgan ausgebildet sein, insbesondere ist die Schließeinrichtung als Ventil und/oder Absperrschieber und/oder Absperrklappe und/oder Kugelhahn ausgebildet. Die Schließeinrichtung bzw. das Schließmittel kann an der oder im Bereich der Aufnahmeöffnung und/oder der Ablauföffnung angeordnet oder ausgebildet sein. Alternativ oder zusätzlich kann das Schließmittel von der Ablauföffnung und/oder von der Aufnahmeöffnung beabstandet, innerhalb des Verlaufs der Leitungsverbindung angeordnet oder ausgebildet sein. Die Schließeinrichtung kann ein, insbesondere elastisches und/oder aus Gummi ausgebildetes Dichtmittel umfassen, das eine einfache und wartungsarme Betätigung - auch nach längeren Ruhezeiten (Nichtbetätigungszeiten) - der Schließeinrichtung zuverlässig ermöglicht.

Es kann sich als vorteilhaft erweisen, wenn über die Ablauföffnung das in der Aufnahmewanne befindliche Wasser gänzlich ablaufen kann. So kann es vorgesehen sein, im Frühjahr, insbesondere im März oder April eine Befüllung der Gewässervorrichtung, z. B. durch Zuführung von Frischwasser, vorzunehmen. Hierbei ist das Schließmittel der Schließeinrichtung in der Verschlussstellung. Der genannte Zeitraum für die Befüllung ist passend, um beispielsweise der Gelbbauchunke und/oder der Wechselkröte einen geeigneten Lebensraum bzw. ein von ihr bevorzugtes Habitat vorzuhalten. Im Herbst und/oder Winter, insbesondere im September und/oder Oktober und/oder November, kann über die Ablaufeinrichtung ein, insbesondere vollständiges, Ablassen bzw. Ableiten des in der Aufnahmewanne befindlichen Wassers erfolgen. Zu diesem Zeitpunkt ist dieser Lebensraum für Unken und/oder bestimmte Kröten, insbesondere für Gelbbauchunke und Wechselkröte, nicht mehr von Interesse. Diese hat sich zu diesem Zeitpunkt in deren Winterlager zurückgezogen, wobei sich die Unken und/oder Kröten hierzu im Erdreich vergraben oder in vorhandene Höhlungen zurückziehen.

Im darauffolgenden Frühjahr kann die Aufnahmewanne wieder erneut mit Wasser, insbesondere Frischwasser, befüllt werden, um den Tieren, insbesondere den Unken und/oder der Wechselkröte, erneut einen Lebensraum für die Fortpflanzung zu bieten. Dies wird dadurch begünstigt, dass die Gelbbauchunke und/oder Wechselkröte abhängig von einer Auen- oder sonstigen Dynamik immer wieder neu entstehende, temporäre Kleingewässer bzw. Gewässer besiedelt, so dass ein erneut befüllte Aufnahmewanne einen für die Gelbbauchunke und/oder die Wechselkröte attraktiven Lebensraum darstellen kann.

Durch das Ablassen bzw. Ableiten des Wassers wird es ermöglicht, etwaigen konkurrierenden Arten und/oder Fressfeinden der für die Gewässervorrichtung vorgesehenen Zieltieren bzw. Zieltierart (insbesondere der Unken, besonders bevorzugt Gelbbauchunken, und der Wechselkröte) die Attraktivität der Gewässervorrichtung zu entziehen. Beispielsweise wird durch das, insbesondere vollständige, Ablassen von Wasser aus der Aufnahmewanne ein Verweilen (z. B. Überwintern) von Fressfeinden (z. B. Rückenschwimmern, Ruderwanzen, Großlibellenlarven, Molchen) der Unken, insbesondere der Gelbbauchunke, oder der Wechselkröte, an der Gewässervorrichtung verhindert, so dass bei einer erneuten Befüllung der Gewässervorrichtung mit Wasser keine oder kaum Fressfeinde der Zieltiere bzw. Zieltierarten an der Gewässervorrichtung vorzufinden sind und damit ein Lebensraum für eine erfolgreiche Fortpflanzung der Zieltiere bzw. der Zieltierarten, insbesondere der Gelbbauchunke und/oder der Wechselkröte, vorgehalten werden kann.

In einer bevorzugten Ausführungsform ist es vorgesehen, dass die Gewässervorrichtung wenigstens eine erste Ablaufeinrichtung mit einer ersten Ablauföffnung und wenigstens eine zweite Ablaufeinrichtung mit einer zweiten Ablauföffnung umfasst, wobei über die Ablauföffnungen (erste und zweite Ablauföffnung) Wasser aus der Aufnahmewanne zumindest temporär zu wenigstens einem Auslassort ableitbar ist und die erste und die zweite Ablauföffnung zueinander einen Abstand aufweisen, insbesondere beträgt der Abstand der ersten und zweiten Ablauföffnung mindestens ein Viertel, bevorzugt mindestens die Hälfte, besonders bevorzugt mindestens Dreiviertel der maximalen Wasserhöhe von einem tiefsten Punkt des Aufnahmevolumens zu einem die Höhe der Aufnahmewanne betreffenden Referenzwert, insbesondere einem, durch den Überlauf definierten bestimmungsgemäßen (maximalen) Wasserpegel des Aufnahmevolumens bzw. der Aufnahmewanne. Durch das Vorsehen zweier unterschiedlicher Ablaufeinrichtungen kann den jeweiligen Ablaufeinrichtungen durch deren sich unterscheidende Ausgestaltung und/oder Anordnung und/oder Ausrichtung unterschiedliche Funktionen für den Betrieb der Gewässervorrichtung zuteil bzw. zugeordnet werden.

Beispielsweise lässt sich durch die Anordnung einer ersten Ablauföffnung in einem bodennahen Bereich und durch die Anordnung der zweiten Ablauföffnung in einem vom Boden beabstandeten Bereich erreichen, dass über die erste Ablauföffnung im Falle der Freigabe bzw. des Öffnens der ersten Ablaufeinrichtung das Wasser in der Aufnahmewanne gänzlich oder überwiegend abgelassen werden kann. Die zweite, vom Boden beabstandete Ablauföffnung kann beispielsweise als Überlauf dienen, d. h. Wasser, das sich über dem Höhenniveau der zweiten Ablauföffnung befindet kann durch die zweite Ablauföffnung und die zweite Ablaufeinrichtung zum Auslassort abgeleitet werden. Hierzu ist es vorteilhaft, wenn die zweite Ablaufeinrichtung stets Freigängig für ein Durchfließen von Wasser ausgebildet ist und deshalb kein Absperrorgan umfasst.

Der Referenzwert kann beispielsweise das Höhenniveau des Randbereichs der Aufnahmewanne bzw. der Gewässervorrichtung sein. Dieses Höhenniveau des Randbereichs ist beispielsweise dadurch definiert, dass bis dorthin das in der Aufnahmewanne befindliche Wasser, in dem Fall, dass kein anderweitiger Überlauf vorgesehen ist, ansteigen kann, bevor das Wasser über den Randbereich tritt und in benachbarte Flächen abfließt. Der Überlauf, insbesondere eine als Überlauf dienende zweite Aufnahmeöffnung ist unterhalb des Höhenniveaus des Randbereichs, beispielsweise mindestens einen Zentimeter, bevorzugt mindestens drei Zentimeter, besonders bevorzugt mindestens 5 Zentimeter unterhalb des Höhenniveaus des Randbereichs angeordnet oder ausgebildet. Der bestimmungsgemäße Wasserpegel des Aufnahmevolumens der Gewässervorrichtung kann beispielsweise durch den Überlauf und damit z. B. durch die zweite Ablauföffnung der zweiten Ablaufeinrichtung bestimmt bzw. definiert werden. Je nach der für den Überlauf, insbesondere der für die zweite Ablauföffnung, gewählten Höhe kann der maximale Wasserpegel der Gewässervorrichtung eingestellt werden. Damit wird es erreicht, dass selbst im Fall von durch Regen zufließendem Wasser, eine vordefinierte Gewässertiefe bzw. Wasserpegelhöhe in der Aufnahmewanne nicht überschritten wird.

Durch über den Randbereich der Gewässervorrichtung tretendendes Wasser kann die Gefahr ausgehen, dass dieses Wasser zumindest abschnittsweise "unter" die Aufnahmewanne, insbesondere unter die Aufnahmewand der Aufnahmewanne, gelangt und dort bei Temperaturen unterhalb des Nullpunkts zu Frostschäden führen kann. Damit dient der Überlauf auch einem Frostschutz und trägt folglich zu einer sich über einen langen Zeitraum ergebenden Nutzbarkeit der Gewässervorrichtung bei. Insbesondere im Fall einer zumindest teilweise Asphaltmaterial aufweisenden Aufnahmewanne bzw. Aufnahmewandung zwischen das Erdreich und der Aufnahmewanne bzw. der Aufnahmewandung gelangendes Wasser zu Beschädigungen führen.

In einer bevorzugten Ausführungsform sind eine zweite Ablaufeinrichtung als Überlauf und eine erste Ablaufeinrichtung als Grundablass vorgesehen, wobei die oberhalb der Aufnahmewanne befindlichen Bestandteile der beiden Ablaufeinrichtungen einen Abstand zueinander im Bereich der Aufnahmewandung von mindestens einem Meter aufweisen können. Dies ermöglicht das Hindurchführen von einem Verdichtungsgerät zur verdichteten Ausbildung der zwischen den beiden Aufnahmeeinrichtungen befindlichen Aufnahmewandung.

Es ist möglich, dass eine erste Ablaufeinrichtung, insbesondere eine als Grundablasseinrichtung ausgebildete erste Ablaufeinrichtung, derart eingerichtet ist, dass über diese in der Aufnahmewanne befindliches Wasser zumindest temporär, insbesondere überwiegend oder vollständig, zu einem Auslassort ableitbar ist, wobei über die der ersten Ablaufeinrichtung zugeordneten Schließeinrichtung das Abfließen des Wassers über die erste Ablaufeinrichtung zumindest temporär sperrbar bzw. freigebbar ist. Damit kann durch Öffnen der Schließeinrichtung bzw. durch Bewegen eines Schließmittels der Schließeinrichtung in eine Freigabestellung ein nahezu vollständiges oder vollständiges Ablassen bzw. Ableiten von Wasser aus der Aufnahmewanne erreicht werden. Wenn die erste Ablauföffnung der ersten Ablaufeinrichtung bzw. die Grundablasseinrichtung optional in einem unteren Drittel, bevorzugt in einem unteren Viertel, der maximalen Wasserhöhe von einem tiefsten Punkt des Aufnahmevolumens zu einem die Höhe der Aufnahmewanne betreffenden Referenzwert, insbesondere einem bestimmungsgemäßen Wasserpegel der Aufnahmewanne, angeordnet oder ausgebildet ist. Bevorzugt kann die erste Ablauföffnung der Ablaufeinrichtung in einem Bodenbereich der Aufnahmewanne, höchst bevorzugt an einem tiefsten Punkt der Aufnahmewanne angeordnet oder ausgebildet sein. Die Ablauföffnung kann beispielsweise in einer Aufnahmewandung und/oder bündig mit einer Aufnahmewandung angeordnet oder ausgebildet sein.

Es ist möglich, dass wenigstens eine Ablaufeinrichtung, insbesondere die erste Ablaufeinrichtung, einen einen durch Behälterwandungen begrenzenden Behälterkörperinnenraum definierenden Behälterkörper umfasst, wobei insbesondere der Behälterkörper im Endmontagezustand eine zum Aufnahmevolumen der Aufnahmewanne ausgerichtete erste Behälteröffnung aufweist und/oder eine zweite Behälteröffnung aufweist, durch welche in dem Behälterkörperinnenraum befindliches Wasser zu einem Auslassort ableitbar ist. Der Behälterkörper kann beispielsweise steif ausgebildet sein, insbesondere kann der Behälterkörper aus Stahl oder Aluminium gefertigt sein. Der Behälterkörper kann als Montagebaugruppe ausgebildet sein, welche im Endmontagezustand in die Aufnahmewanne eingebaut wird, insbesondere wird der Behälterkörper derart relativ zu der Aufnahmewanne eingebaut, dass im Endmontagezustand ein bündiger Übergang zwischen dem Behälterkörper, insbesondere einer dem Aufnahmevolumen zugewandten Behälteröffnung des Behälterkörpers mit einer dem Aufnahmevolumen zugewandten Oberfläche der Aufnahmewanne vorliegt. Der Behälterkörper kann z. B. zwei Behälteröffnungen aufweisen, wobei eine erste, insbesondere größere, Behälteröffnung dem Aufnahmevolumen der Aufnahmewanne zugewandt ist und eine zweite, insbesondere kleinere, Behälteröffnung dem Auslassort bzw. der zum Auslassort führenden Ablaufleitung zugewandt ist. Mit anderen Worten ermöglicht der Behälterkörper eine einfache und zumindest zum Teil vorkonfektionierte bzw. vormontierte zu montierende Schnittstelle zu angrenzenden Bauteilen, beispielsweise der zum Auslassort führenden Ablaufleitung. Der Behälterkörper kann eine quaderartige Form aufweisen, vorzugsweise sind mehrere das Behältervolumen definierende Behälterwände stoff- und/oder formschlüssig miteinander verbunden, z. B. zusammengeschweißt. Der Behälterkörper ist vorzugsweise flüssigkeitsdicht ausgebildet, so dass ein in dem Aufnahmevolumen befindliches Wasser über die erste Behälteröffnung in das Behältervolumen und von dem Behältervolumen über die zweite Behälteröffnung und einer sich an die zweite Behälteröffnung anschließende Ablaufleitung zum Auslassort gelangt. Der Behälterkörper kann beispielsweise Aufnahmemittel und/oder Dichtungsmittel zur Fixierung bzw. Abdichtung und/oder Montage von weiteren Bauteilen umfassen.

Es kann vorgesehen sein, dass in oder an dem Behälterkörper zumindest abschnittsweise ein Fangbehälter, insbesondere ein als Schlammfangbehälter ausgebildeter Fangbehälter, angeordnet oder anordenbar ist. Dieser Fangbehälter ist eingerichtet, ein in einem durch Fangbehälterwandungen definierten Fangbehälterinnenraum befindliche Wasser zu dem Auslassort abzuleiten, wobei Fangstoffe in dem Fangbehälterinnenraum zurückgehalten werden. Typischerweise ist der Fangbehälter derart ausgelegt, dass Schlamm oder andere, insbesondere schwere, Schwebstoffe in dem Fangbehälterinnenraum zurückgehalten werden. Hierbei kann ein Zurückhalten durch ein Absetzen der Fangstoffe und/oder durch an die Dimensionierung und/oder Geometrie der Fangstoffe angepasste Öffnungen bzw. eine entsprechende Gitterstruktur erreicht werden. Beispielsweise ist der Fangbehälter als Schlammfangbehälter ausgebildet, wobei wenigstens eine, insbesondere mehrere, Überlauföffnung(en) an den Fangbehälterinnenraum definierenden Fangbehälterwandungen angeordnet oder ausgebildet ist bzw. sind. Über die wenigstens eine Überlauföffnung, kann in dem Fangbehälterinnenraum befindliches Wasser in einen zur Auslassöffnung führenden Bereich übertreten und in ein unterhalb und/oder seitlich des Fangbehälters liegendes Volumen oder Teilvolumen (Zwischenraum) des Behälterkörperinnenraums gelangen. Von dort kann das Wasser über die zweite Behälteröffnung zu einem Auslassort abfließen. Die in dem Wasser befindlichen Schwebstoffe können sich dabei in dem Bodenbereich des Fangbehälterinnenraums bzw. dem unterhalb der Überlauföffnungen befindlichen Fangbehälterteilvolumen als z. B. Schlamm oder Schluff absetzen. Mit anderen Worten wird durch den Fangbehälter für das über die erste Ablaufeinrichtung von dem Aufnahmevolumen der Aufnahmewanne zu einem Ablaufort abgeführte Wasser ein Entfernen von Schwebstoffen durch Absetzen bzw. durch Sedimentation erreicht.

Der Fangbehälter ist beispielsweise lösbar in oder an dem Behälterkörper verbunden. Vorzugsweise weist der Fangbehälter Angriffsbereiche auf, durch welche eine erleichterte manuelle oder werkzeuggebundene Entnahme des Fangbehälters aus dem Behälterkörper ermöglicht wird. Z. B. sind Eingriffsösen und/oder -ausnehmungen zum Eingriff für ein Greifwerkzeug an dem Fangbehälter derart angeordnet oder ausgebildet, so dass diese im fangbehältereingesetzten Zustand des Fangbehälters in dem Behälterkörper der Fangbehälter aus dem Behälterkörper entnehmbar ist.

In einer weiteren vorteilhaften Ausführungsform ist in oder an, insbesondere auf, dem Behälterkörper zumindest temporär ein wasserdurchlässiges Deckelelement zumindest temporär anordenbar, bevorzugt ist das Deckelelement gitterartig ausgebildet. Ein gitterartig ausgebildetes Deckelelement kann Gitteröffnungen aufweisen, die derart gewählt bzw. dimensioniert sind, dass für eine Person keine Verletzungsgefahr (z. B. Stolpern) besteht und der Person einen sicheren Tritt auf dem Deckelement ermöglicht. Bevorzugt sind die Öffnungen des eines gitterartigen Deckelements derart dimensioniert und/oder geformt, dass ein Hindurchtreten von Tieren, insbesondere von Unken und/oder der Wechselkröte, in beide Richtung ermöglicht wird, d. h., dass selbst ausgewachsene Unken oder Wechselkröten die Öffnungen passieren können. Beispielsweise kann das Deckelelement mit Öffnungen versehen sein, die jeweils eine Fläche von mindestens 150 mm² aufweisen, wobei eine maximale Erstreckung der Öffnung beispielsweise mindestens 45 mm beträgt.

Das Deckelelement kann vorzugsweise lösbar in oder an einem behälterkörperseitigen Deckelaufnahmebereich angeordnet oder anordenbar sein, hierzu kann der Behälterkörper beispielsweise einen zumindest abschnittsweise an seiner Innenseite umlaufenden und in den Behälterinnenraum gerichteten Auflagekragen umfassen.

Es ist möglich, dass eine Ablauföffnung einer Ablaufeinrichtung, insbesondere die zweite Ablauföffnung der zweiten Ablaufeinrichtung, in einer oberen Hälfte, bevorzugt in einem oberen Drittel, besonders bevorzugt in einem oberen Viertel, höchst bevorzugt in einem oberen Sechstel, der Höhe des tiefsten Punktes der Aufnahmewanne zu einem Randbereich der Aufnahmewanne und/oder auf Höhe eines bestimmungsgemäßen Wasserpegels des Aufnahmevolumens angeordnet oder ausgebildet ist. Damit wird es erreicht, dass die zweite Ablauföffnung als Überlauf eingesetzt werden kann und sich die maximale Höhe des Wasserpegels der Höhe bzw. dem Höhenniveau der zweiten Ablauföffnung entspricht. Die erste und zweite Ablaufeinrichtung können unterschiedliche Funktionen erfüllen, so kann beispielsweise die erste Ablasseinrichtung ein gänzliches Ablassens des in der Aufnahmewanne befindlichen Wassers und die zweite Ablaufeinrichtung die Funktion des Verhinderns von über die Randbereiche der Aufnahmewanne sonst übertretenden Wassers erfüllen.

Es kann sich als vorteilhaft erweisen, wenn eine Ablaufeinrichtung, insbesondere die zweite Ablauföffnung, höhenverlagerbar, bevorzugt höhenverlagerbar relativ zu einem Bodenbereich der Aufnahmewanne, ausgebildet ist, besonders bevorzugt ist die Ablauföffnung stufenlos in deren Höhe (relativ) zu einem Bodenbereich der Aufnahmewanne anordenbar bzw. arretierbar. Dadurch, dass die zweite Ablauföffnung z. B. durch einen Teleskopmechanismus der zweiten Ablaufeinrichtung in dessen Höhe einstellbar ist, kann auf einfache und komfortable Weise der maximale Wasserpegel bzw. der bestimmungsgemäße maximale Wasserpegel an der Gewässervorrichtung eingestellt werden. Auch wird es hiermit ermöglicht, eine bereits verbaute Ablaufeinrichtung in deren Höhenniveau der zweiten Ablauföffnung nachträglich auf einfache und komfortable Weise zu verändern. Die Funktion der Höhenverlagerbarkeit der Ablauföffnung kann durch einen kraft- und/oder formschlüssigen Mechanismus zu deren Arretierung und/oder Freigabe erfolgen, z. B. durch einen arretierbaren Teleskopmechanismus. Der Mechanismus ist vorzugsweise manuell, d. h. von Hand, und/oder werkzeuggestützt arretierbar bzw. freigebbar. Damit wird es einer Person ermöglicht auf einfache und komfortable Weise die Höhe der zweiten Ablauföffnung zu verändern. Alternativ oder zusätzlich kann es vorgesehen sein, dass die mit der Ablauföffnung versehene zweite Ablaufeinrichtung aus mehreren, wahlweise miteinander verbindbaren, insbesondere unterschiedliche Längen aufweisenden, Ablaufleitungsabschnitten ausgebildet ist, welche in unterschiedlichen Konfigurationen zur Erreichung einer Zielhöhe der zweiten Ablauföffnung verbindbar sind.

Es ist möglich, dass eine Ablaufeinrichtung, insbesondere die zweite Ablaufeinrichtung, ein, bevorzugt innerhalb des Aufnahmevolumens angeordnetes oder ausgebildetes, Kupplungsmittel zur lösbaren Befestigung eines ersten Ablaufeinrichtungsabschnitts an einem weiteren Ablaufeinrichtungsabschnitt umfasst. Durch das Kupplungsmittel wird es ermöglicht auf einfache und komfortable Weise einen ersten Ablaufeinrichtungsabschnitt von einem weiteren Ablaufeinrichtungsabschnitt zu trennen und wieder zu verbinden. Hierbei kann das Kupplungsmittel eine kraft- und/oder formschlüssige Verbindung zweier Kupplungselemente des Kupplungsmittels umfassen. Das Kupplungsmittel ist vorzugsweise innerhalb des Aufnahmevolumens der Aufnahmewanne angeordnet oder ausgebildet. Auch kann das Kupplungsmittel vorzugsweise auf einem höheren Höhenniveau angeordnet sein, als eine erste Ablauföffnung einer ersten Ablaufeinrichtung, insbesondere als eine erste Ablaufeinrichtung einer als Grundablass wirkenden ersten Ablaufeinrichtung. In diesem Fall wird es ermöglicht, durch Ablassen des in der Aufnahmewanne befindlichen Wassers über die erste Ablaufeinrichtung das Kupplungsmittel von dem Wasser freizulegen bzw. "trockenzulegen".

Das Verbinden und/oder Lösen der Kupplungselemente des Kupplungsmittels kann vorzugsweise zumindest teilweise, insbesondere ausschließlich, durch eine Drehbewegung erfolgen. Beispielsweise weist das Kupplungsmittel ein erstes und ein zweites Kupplungselement auf, die korrespondierende Formen aufweisen und ineinandergreifen können, z. B. nach Art einer Klauenkupplung. Das der Aufnahmewandung zugewandte Kupplungselement kann im entkuppelten Zustand mit einem Deckel versehen werden. Der Deckel kann beispielsweise verliersicher an dem der Aufnahmewandung zugewandten Kupplungselement befestigt bzw. beweglich gelagert sein. Auch kann der Deckel in eine Schließstellung vorgespannt an dem der Aufnahmewandung zugewandten Kupplungselement befestigt bzw. gelagert sein.

Die zweite Ablaufeinrichtung kann einen Krümmer zur Umlenkung einer im Wesentlichen vertikal verlaufenden Ablaufleitung zu einer hierzu stromab angeordneten im Wesentlichen bzw. unter leichtem Gefälle horizontal verlaufenden Ablaufleitung aufweisen. Die horizontale und/oder die vertikale Ablaufleitung kann im Wesentlichen eine geradlinige Form aufweisen. Der Krümmer kann beispielsweise derart ausgebildet bzw. angeordnet sein, dass er unterhalb der Aufnahmewanne im Boden verankert ist und eine ausreichende Stützfunktion für die in oder an der vertikal verlaufenden Ablaufleitung angeordneten Elemente (z. B. Kupplungsmittel, Schutzmittel) aufweist. Beispielsweise ist der Krümmer als Muffenfußkrümmer ausgebildet.

Es ist möglich, dass zumindest abschnittsweise über einen gemeinsamen Ablaufleitungsabschnitt Wasser aus dem Aufnahmevolumen der Aufnahmewanne über die erste und die zweite Ablaufeinrichtung zu einem Auslassort ableitbar ist, insbesondere ist der gemeinsame Ablaufleitungsabschnitt stromab einer Schließeinrichtung, insbesondere stromab einer der ersten Ablaufeinrichtung zugeordneten Schließeinrichtung, angeordnet oder ausgebildet. Das Ableiten von Wasser über die erste und zweite Ablaufeinrichtung kann zeitgleich oder zeitlich versetzt über den gemeinsamen Ablaufleitungsabschnitt erfolgen. Dadurch, dass die Schließeinrichtung der ersten Ablaufeinrichtung stromauf einer Zuleitungsstelle der zweiten Ablaufeinrichtung zum gemeinsamen Ablaufleitungsabschnitt liegt, kann ein Ableiten von Wasser über die zweite Ablaufeinrichtung unabhängig von dem Schaltzustand (Verschlussstellung oder Freigabestellung) der Schließeinrichtung erfolgen. Damit ist sichergestellt, dass stets ein Ableiten von Wasser durch eine als Überlauf dienende zweite Ablaufeinrichtung gewährleistet wird. Der gemeinsame Ablaufleitungsabschnitt kann beispielsweise zumindest abschnittsweise, insbesondere vollständig, unterhalb einer Erdoberfläche bzw. unterirdisch, insbesondere zumindest abschnittsweise, insbesondere vollständig, unterhalb der Aufnahmewanne verlaufen.

In einer vorteilhaften Ausführungsform kann es beispielsweise vorgesehen sein, dass eine Ablauföffnung der Ablaufeinrichtung, insbesondere die zweite Ablauföffnung der zweiten Ablaufeinrichtung, durch ein wasserdurchlässiges Schutzmittel derart verschlossen ist, dass Fremdstoff, insbesondere Blätter oder ähnliches, durch die Ablauföffnung nicht hindurchtreten können. Das Schutzmittel kann beispielsweise ein Gitter aufweisen, das feste Fremdstoffe ab einer definierten Mindestgröße vor einem Hindurchtreten abhält. Zum Beispiel kann das Schutzmittel derart ausgebildet sein, dass Blätter und/oder Kleintiere nicht durch die Ablauföffnung hindurchtreten können. Hierzu kann das Schutzmittel eine Trennwand aufweisen, welche die Umwelt zu dem Innenraum des Schutzmittels abtrennt, wobei die Trennwand beispielsweise ein Lochblech umfassen kann, dessen maximaler Lochdurchmesser 4 mm, bevorzugt 3,5 mm, besonders bevorzugt 2,5 mm, beträgt. Der minimale Lochdurchmesser kann beispielsweise 0,5 mm betragen. Das Schutzmittel kann optional lösbar, insbesondere kraft- und/oder formschlüssig, an der ersten Ablaufeinrichtung befestigt bzw. verbunden sein. Zum Beispiel ist das Schutzmittel über eine Schraubverbindung mit der Ablaufeinrichtung bzw. mit einem einen aufnahmevolumenseitigen Endbereich bildenden Ablaufeinrichtungsabschnitt der Ablaufeinrichtung verbunden.

Das Schutzmittel kann beispielsweise einen einen Innenraum definierenden Schutzkörper umfassen, wobei der Schutzkörper z. B. eine zylindrische oder zylinderartige Form aufweisen kann, wobei die Mantelfläche eine mit Ausnehmungen versehene Trennwand bzw. eine Wasserdurchtrittsfläche ausbilden kann. Vorzugsweise ist der Schutzkörper derart steif und/oder fest ausgebildet, dass dieser eine Widerstandsfähigkeit gegen Vandalismus, z. B. gegen Steinschlag bzw. Steinwurf aufweist.

Es ist möglich, dass ein Greifelement zwischen dem Kupplungsmittel und dem freien, stromauf des Kupplungsmittels befindlichen Ende der Ablaufeinrichtung angeordnet oder ausgebildet ist. Das Greifelement kann dazu dienen manuell oder mittels eines Werkzeugs ein Drehmoment auf den stromauf des Kupplungsmittels befindlichen Ablaufeinrichtungsabschnitt einzubringen und damit auch ein Drehmoment auf das Kupplungsmittel anzulegen, um das Kupplungsmittel zu öffnen oder zu schließen. Hierzu kann es beispielsweise vorgesehen sein, dass das Greifelement in einer Höhe von 0,30 m bis 1,80 m, bevorzugt in einer Höhe von 0,5 m bis 1,50 m, besonders bevorzugt in einer Höhe von 0,80 m bis 1,30 m über einer die zweite Ablaufeinrichtung durch die Aufnahmewanne hindurchführenden Bodenbereich angeordnet oder ausgebildet. Damit liegt das Greifelement in einem ergonomisch gut hantierbaren Bereich für eine in der Ablaufwanne stehende Person. Das Greifelement kann beispielsweise senkrecht und radial abstehend zu einem rohrartigen Abschnitt eines über das Kupplungsmittel lösbaren Ablaufeinrichtungsabschnitt angeordnet oder ausgebildet sein.

Die Schließeinrichtung, insbesondere eine der zweiten Ablaufeinrichtung zugeordnete Schließeinrichtung, kann beispielsweise zwischen einem Auslassort und der Ablauföffnung, insbesondere zwischen dem Auslassort und der zweiten Ablauföffnung, angeordnet oder ausgebildet sein. Hierbei kann insbesondere ein Schließmittel der Schließeinrichtung in einem unterhalb einer Erdoberfläche platzierten, insbesondere unterhalb einer Aufnahmewanne platzierten, ablaufeinrichtungsseitigen Leitungsabschnitt angeordnet oder ausgebildet sein. Bevorzugt ist das Schließmittel vermittels eines Steuer- und/oder Regelungsmittels zwischen einer Verschlussstellung und einer Freigabestellung verstellbar. Das Steuer- und/oder Regelungsmittel kann beispielsweise zumindest abschnittsweise, insbesondere vollständig, als mechanische Verbindung ausgebildet sein, z. B. als Gestänge, insbesondere als Schub- und/oder Zuggestänge). Alternativ oder zusätzlich kann das Steuer- und/oder Regelungsmittel zumindest abschnittsweise, insbesondere vollständig, als flexible Welle ausgebildet sein. Allgemein kann von dem Steuer- und/oder Regelungsmittel eine rotatorische und/oder translatorische Bewegung ausgehend von einer Handhabe zu dem Schließmittel übertragen werden, um das Verschlussmittel in eine Verschlussstellung und/oder in eine Freigabestellung zu bewegen.

Es kann ein Handhabungsmittel zur manuellen oder werkzeuggestützten Betätigung des Steuerungs- und/oder Regelungsmittels im Bereich eines zumindest temporär frei zugänglichen Handhabungsbereichs angeordnet oder ausgebildet sein, insbesondere ist der Handhabungsbereich zumindest temporär durch eine Handhabungsbereichsabdeckung zur Umwelt hin abdeckbar bzw. gasdicht und/oder flüssigkeitsdicht und/oder schmutzdicht abschließbar. Damit ist das in einem Handhabungsbereichsvolumen eines Handhabungsbereichs angeordnete Handhabungsmittel durch Abdecken des Handhabungsbereichs bzw. des Handhabungsbereichsvolumens vermittels der Handhabungsbereichsabdeckung vor Witterungseinflüssen und/oder Schutz geschützt. Alternativ oder zusätzlich kann die Handhabungsbereichsabdeckung, insbesondere über ein Schloss, abschließbar das Handhabungsbereichsvolumen zur Umwelt hin abschließen. Damit kann eine ungewollte Manipulation bzw. Betätigung des Handhabungsmittels und damit des Verschlussmittels durch unberechtigte Dritte verhindert werden.

Es kann sich als vorteilhaft erweisen, wenn eine zumindest temporär Wasser aus einem Wannenaufnahmevolumenmontagebereich zu einem Ablaufort ableitende dritte Ablauföffnung einer dritten Ablaufeinrichtung vorgesehen ist, wobei die dritte Ablauföffnung in einem tieferen Höhenniveau als die erste und die zweite Ablauföffnung angeordnet oder ausgebildet ist. Die dritte Ablauföffnung kann beispielsweise im Endmontagezustand durch einen Aufnahmewannenabschnitt zumindest abschnittsweise oder vollständig überdeckt sein. Die dritte Ablauföffnung bildet somit eine Montageablauföffnung bzw. einen Bauzeitentwässerungsabgang, welche bzw. welcher eine Entwässerung der Baugrube bzw. der im Bau befindlichen Aufnahmewanne sicherstellt, so dass während eines z. B. schichtartigen Aufbaus der Aufnahmewanne etwaiges für den Aufbauprozess im Wannenbereich unerwünschtes Wasser zuverlässig abgeführt wird. Da nach der Fertigstellung der Aufnahmewanne bzw. während des bestimmungsgemäßen Gebrauchs der Gewässervorrichtung und insbesondere der Aufnahmewanne, die dritte Ablauföffnung obsolet geworden ist, kann diese beispielsweise zumindest während des Auftrags einer, insbesondere der letzten, Materialschicht zur Ausbildung der Aufnahmewanne überdeckt bzw. überbaut werden. Hierzu kann die dritte Ablauföffnung vor dem Materialauftrag und damit vor der Überdeckung der dritten Ablauföffnung durch einen Verschlussstopfen und einem optionalen Dichtmittel, beispielsweise einem Dichtring, verschlossen werden. Es kann weiter optional vorgesehen sein, dass die dritte Ablauföffnung der dritten Ablaufeinrichtung einen gemeinsamen Ablaufleitungsabschnitt mit der ersten und/oder der zweiten Ablaufleitung aufweist, vorzugsweise schließt die dritte Ablaufleitung stromauf eines Zulaufpunkts einer weiteren Ablaufleitung an eine erste und/oder zweite Ablaufleitung an.

Die Aufnahmewanne kann zumindest abschnittsweise, insbesondere vollflächig, einen schichtartigen Aufbau aufweisen, wobei wenigstens eine erste Schicht aus einem Gussasphalt gebildet ist, insbesondere weist der Gussasphalt einen thermoplastischen Materialbestandteil und/oder einen Anteil an Bitumen von 2 bis 40 Masse-%, bevorzugt von 3 bis 30 Masse-%, besonders bevorzugt von 4 bis 20 Masse-% auf. Als Gussasphalt kann im vorliegenden Sinne auch eine Asphaltmastix verstanden werden. Damit meint Gussasphalt eine bitumengebundene dichte Massen, die aus Naturasphaltrohmehl, feinkörnigem Kalksteingemisch, Sand und/oder Splitt und ggf. wenigstens einem Füller oder weiteren Zusätzen besteht. Hierbei können die Mineralstoffe ausschließlich feinkörnig oder fein- und grobkörnig sein. Allgemein kann der als Gussasphalt verwendete Asphaltmastix beispielsweise einen höheren Anteil an Bitumen und/oder feinere mineralische Zuschläge als Straßenbauasphalte aufweisen. Zum Beispiel kann für die Gussasphalt- bzw. Asphaltmastixschicht (erste Schicht der Aufnahmewanne) ein Asphaltmastix von 9 bis 18 %, vorzugsweise von 12 bis 16 %, besonders bevorzugt von ca. 14 %, verwendet werden. Die Prozentangabe im Zusammenhang zu dem Asphaltmastix bedeutet den Anteil des Bindemittels, insbesondere des Bitumen. Diese Prozentangabe kann Volumenprozent oder Gewichtsprozent betreffen. Die Schichtdicke der ersten, aus Gussasphalt bestehenden Schicht kann 5 bis 40 mm, bevorzugt 10 bis 30 mm, besonders bevorzugt 15 bis 25 mm betragen. Dabei kann der Gussasphalt beispielsweise mehrlagig aufgetragen werden, so dass mehrere Lagen an Gussasphalt die erste Schicht bilden.

Der Gussasphalt kann beispielsweise in einer sich radial um den Grundablass drehenden Auftragsbewegung aufgebracht werden. Im Fall von mehreren Lagen an Gussasphalt kann die radiale Beginnfuge bzw. Beginnlinie des Auftrags über die bzw. relativ zu den weiteren Lagen versetzt angeordnet werden. Der Gussasphalt kann eine Dichte bei 20°C von 1,0 bis 5,0 g/cm³, bevorzugt von 1,5 bis 3,5 g/cm³, besonders bevorzugt von 2,0 bis 3,0 g/cm³, und/oder eine Hochviskose bis plastische Viskosität aufweisen.

Alternativ oder zusätzlich kann der für die, insbesondere erste, Schicht verwendete Asphalt bzw. Asphaltmischgut folgender Mischgutart entsprechen: AC 16 B S. Die Art der Gesteinskörnung kann beispielsweise GGK Moräne, FGK Moräne und/oder Gesteinsmehl umfassen. Das Bindemittel kann beispielsweise ein Straßenbaubitumen, insbesondere ein Straßenbaubitumen 50/70, sein.

Es ist möglich, dass eine zweite Schicht, insbesondere eine an der dem Erdboden zugewandten Oberfläche der ersten Schicht mittelbar oder unmittelbar angeordnete oder ausgebildete zweite Schicht, als eine Bitumen-Trag-Deckschicht ausbildet ist. In einer bevorzugten Ausführungsform wird das Material AC 16 BS 50-70 für die zweite Schicht - die Bitumen-Trag-Deckschicht - verwendet. Die Bitumen-Trag-Deckschicht, ist eine Kombination einer Trag- und einer Deckschicht, die eine vergleichsweise dünne Befestigung erlaubt. Diese kann, insbesondere bei einer Verwendung von einer Asphaltmischgutart AC 16 TD oder AC 16 BS, eine Schichtdicke von z. B. 5 bis 20 cm, bevorzugt von 7 bis 15 cm, besonders bevorzugt von 8,5 bis 12 cm aufweisen. Beispielsweise kann im Falle einer Asphalttrag- und Asphaltdeckschicht eine Körnung von 16 mm mit einer Schichtdicke von 8 cm verwendet werden.

Ferner kann es optional vorgesehen sein, dass eine dritte Schicht, insbesondere eine an der dem Erdboden zugewandten Oberfläche der ersten oder zweiten Schicht mittelbar oder unmittelbar angeordnete oder ausgebildete dritte Schicht, eine Tragschicht ausbildet, bevorzugt wird die dritte Schicht bzw. die Tragschicht aus wenigstens einer ersten Tragschichtlage aus (z. B. gebrochenem) Natursteinmaterial, insbesondere mit einer Korngrößenverteilung/Sieblinie von 0/32 mm bis 0/64-XXX, bevorzugt von 0/45 mm bis 0/56 mm, und/oder aus wenigstens einer weiteren Tragschichtlage mit einer Korngröße von 0-4 mm und/oder einer Korngrößenverteilung/Sieblinie von 0/8 mm bis 0/22 mm, insbesondere 0/16 mm gebrochenem Naturstein gebildet. Hierbei ist es vorteilhaft, wenn die die dritte Tragschichtlage bildende erste und/oder zweite Tragschichtlage kein Material in der Korngröße von Kies enthält. Kiesförmiges Material würde auf Grund der runden Körnerform zu Verarbeitungsnachteilen während des Aufbaus der dritten Schicht führen. Die erste Tragschichtlage kann beispielsweise eine Schichtdicke von 10 bis 50 cm, vorzugsweise von 15 bis 45 cm, besonders bevorzugt von 20 bis 40 cm, aufweisen. Die weitere Tragschichtlage kann beispielsweise auf der dem Aufnahmevolumen zugewandten Oberfläche der ersten Tragschichtlage aufgebracht werden und beispielsweise als Feinnivellierschicht bzw. als Ausgleichsschicht dienen. Die Schichtdicke der weiteren Tragschichtlage kann 0,5 bis 7 cm, bevorzugt 1,0 bis 5,0 cm, betragen.

Für die erste und/oder zweite Schicht, d. h. für die Bitumentragschicht und/oder die Bitumen-Trag-Deckschicht kann beispielsweise Trinkwasserasphalt eingesetzt werden. Dies birgt den Vorteil, dass etwaige zumindest abschnittsweise Setzungen der Gewässervorrichtung bis zu einem gewissen Grad rissfrei aufgenommen werden können. Im Falle von Rissen oder Beschädigungen der Gewässervorrichtung, insbesondere der Dichtungsschicht der Aufnahmewanne, können diese Beschädigungen durch Straßenbaupersonal einfach und schnell behoben werden.

Es kann sich als vorteilhaft erweisen, wenn eine weitere Schicht bzw. Materiallage, insbesondere eine an der dem Erdboden abgewandten Oberfläche bzw. an der dem Aufnahmevolumen zugewandte Oberseite der ersten Schicht mittelbar oder unmittelbar angeordnete oder ausgebildete weitere Schicht bzw. Materiallage, aus Steinmaterial, insbesondere Natursteinmaterial ausgebildet ist. Hierbei kann beispielsweise eine haufwerkartige Gesteinsschüttung aus grobem Material, d. h. mit einer Korngröße von größer 40 mm, bevorzugt von größer 50 mm, besonders bevorzugt von größer 60 mm verwendet werden. Ein derartiges Material hat den Vorteil, dass sich zwischen den einzelnen Steinen Hohlräume ausbilden, welche als Deckung und Rückzugsorte für die Zieltierart dienen kann. Als Naturstein bietet sich beispielsweise autochthones und/oder gebrochenes, insbesondere frostbeständiges (z. B. frostbeständig bei freier Bewitterung während einer wasserabgelassenen Gewässervorrichtung), Gesteinsmaterial an. Beispielsweise kann als Gesteinsmaterial Kalkstein, insbesondere Muschelkalk, verwendet werden. Insbesondere Dolomit bzw. Dolomitstein kann sich hierbei als vorteilhaft und frostbeständig erweisen.

Alternativ oder zusätzlich kann es vorgesehen sein, dass zumindest der Randbereich der Aufnahmewanne, insbesondere die Aufnahmewanne überwiegend, beispielsweise aus einer haufwerkartigen Gesteinsschüttung von grobem Material mit einer durchschnittlichen Korngröße von größer 51 mm, bevorzugt von größer 60 mm bedeckt bzw. gebildet ist. Hierbei kann der Randbereich der Aufnahmewanne beispielsweise eine Breite von mindestens 50 cm, bevorzugt von mindestens 80 cm, aufweisen und sich insbesondere vollständig um den Umfang der Aufnahmewannen erstrecken. Damit wird bei einer Entleerung der Aufnahmewanne eine Kapillarwirkung der weiteren Schicht bzw. der obersten Schicht und/oder eine potenzielle Ansiedlung ruderaler Vegetationssukzession verhindert.

Es ist möglich, dass an wenigstens einer, insbesondere an sämtlichen, Durchdringung der Aufnahmewanne, d. h. z. B. an der Durchdringung des Behälterkörpers, des Handhabungsbereichs und/oder der zweiten Ablaufeinrichtung an der Aufnahmewanne eine Vergussmasse, insbesondere durch eine Heiß-Fugenvergussmasse, verschlossen bzw. abgedichtet wird. Hierbei kann es sich als vorteilhaft erweisen, wenn die zu verfüllenden Trennfugen der Durchdringungsbereiche mindestens eine Breite von 10 mm, bevorzugt von 15 mm, besonders bevorzugt von 20 mm, und/oder eine Tiefe von mindestens 10 bis 300 mm, bevorzugt von 25 bis 225 mm, besonders bevorzugt von 45 bis 160 mm aufweist. Diese mit einer Fugenmasse bzw. mit einer Dichtmasse zu verfüllende Trennfuge kann sich dabei beispielsweise zumindest abschnittsweise durch beide Asphaltschichten, d. h. durch die erste und zumindest abschnittsweise durch die zweite Schicht erstrecken und/oder in diese einragen.

Als Fugenmasse, insbesondere als Heiß-Fugenmasse kann ein polymermodifizierter bitumenhaltige Fugenmasse gemäß TL Fug-StB und DIN EN 14188-1, Typ N2 zum Einsatz kommen und eine Dichte von ca. 1,1 g/cm³ aufweisen. Vor dem Auftrag der Fugenmasse kann ein Haftgrund, z. B. COLZUMIX-Haftgrund aufgebracht werden.

Die Akzeptanz bzw. die Anpassung der Gewässervorrichtung für eine gewünschte Zieltierart kann dadurch erreicht werden, dass in der obersten Schicht zumindest abschnittsweise Applikationen platziert werden. Derartige Applikationen können beispielsweise schlammkornhaltige Gebinde sein, d. h. z. B., dass in, insbesondere flexiblen und/oder wasserdurchlässigen, Behältern (z. B. BigBags) schlammkornhaltige Gebinde aufgenommen sind und diese Behälter in der Gewässervorrichtung abgelegt werden. Diese Behälter können bedarfsweise über behälterseitige Haken oder Ösen abgesetzt, aufgehoben oder umgesetzt werden. Derartige Behälter können beispielsweise ein Fassungsvolumen von 0,1 bis 1,0 m³, bevorzugt von 0,2 bis 0,5 m³ aufweisen.

Die Gewässervorrichtung ist vorzugsweise derart ausgebildet, dass diese zumindest abschnittsweise, insbesondere vollständig, durch ein Fahrzeug, insbesondere durch ein Nutzfahrzeug, befahrbar ist. Hierbei kann zumindest im Endmontagezustand das Deckelelement und/oder der Behälterkörper und/oder die erste Ablaufeinrichtung und/oder die zweite Ablaufeinrichtung und/oder die Aufnahmewanne zumindest abschnittsweise oder vollständig mit einem Fahrzeug, insbesondere einem Nutzfahrzeug, befahrbar sein. Durch die Befahrbarkeit der Gewässervorrichtung kann im Wartungsfall auf Fahrzeuge zurückgegriffen werden, um beispielsweise Reinigungsflüssigkeit, insbesondere Reinigungswasser, nahe oder in die Gewässervorrichtung zu transportieren. Auch kann über ein Fahrzeug antransportiertes Frischwasser komfortabel in die Aufnahmewanne übergeben werden, beispielsweise mittels eines mit einer Förderpumpe verbundenen Schlauchs. Mit einer Befahrbarkeit der Gewässervorrichtung oder deren Bestandteile ist gemeint, dass etwaige durch das Befahren der Gewässervorrichtung und/oder deren Bestandteile erfolgende Einwirkung keine oder keine wesentlichen Auswirkungen auf die Funktion der Gewässervorrichtung und deren Bestandteile hat. Insbesondere werden die durch die weitere, oberste Schicht gebildeten Hohlräume nicht oder nicht wesentlich beeinträchtigt bzw. verändert. Typischerweise kann die Befahrbarkeit der Gewässervorrichtung Fahrzeuge mit einem zulässigen Gesamtgewicht bzw. einer zulässigen Gesamtmasse von 0,5 bis 45 Tonnen, bevorzugt 0,8 bis 19 Tonnen, besonders bevorzugt von 1 bis 16 Tonnen, höchst bevorzugt 2,5 bis 10 Tonnen umfassen.

Ferner kann es sich als vorteilhaft erweisen, wenn die Gewässervorrichtung in einer Nord-Süd-Ausrichtung ausgerichtet ist, wobei die südexponierten Gewässerböschungen bzw. -ränder vorzugsweise steil ausgebildet sind, d. h. z. B., dass diese eine Steigung von mindestens 20 %, bevorzugt von mindestens 35 %, höchstbevorzugt von mindestens 40 %, aufweisen. Durch eine relativ steile Ausrichtung der im Süden platzierten Aufnahmewandung kann deren auf Grund von Sonneneinstrahlung erfolgende Erwärmung begünstigt werden.

Zu der ersten Ablaufeinrichtung bzw. zu dem Grundablass hin weist die Aufnahmewandung ein mittleres Gefälle und/oder ein Mindestgefälle von mindestens 1,5 %, vorzugsweise von mindestens 2,0 % besonders bevorzugt von mindestens 2,5 % auf. Ein derartiges Gefälle ermöglicht einen zuverlässigen Ablauf von in der Aufnahmewanne befindlichem Wasser zu der ersten Ablauföffnung der ersten Ablaufeinrichtung. Auch lassen sich die Gefälle bzw. Neigungen in den angegebenen Bereichen durch Asphaltbauer, insbesondere im Handeinbau, zuverlässig und effizient herstellen.

Neben der Gewässervorrichtung betrifft die Erfindung auch ein Verfahren zum Betrieb einer Gewässervorrichtung zur zumindest temporären Ansiedlung und/oder Beherbergung von Amphibien, in einer hierin beschriebenen Gewässervorrichtung, wobei das Verfahren folgende Verfahrensschritte umfasst: (a) Befüllen einer Aufnahmewanne der Gewässervorrichtung mit Wasser, insbesondere mit Frischwasser, (b) Auslassen des Wassers aus der Aufnahmewanne zu einem Auslassort über eine mit einer Ablauföffnung ausgebildeten Ablaufeinrichtung vermittels zumindest temporäres Freigeben einer Ablaufeinrichtung einer gewässervorrichtungsseitigen Schließeinrichtung durch verstellen eines Schließmittels der Schließeinrichtung von einer Verschlussstellung in eine Freigabestellung. Hierbei kann es vorteilhaft sein, wenn jährlich wenigstens ein Befüllen der Aufnahmewanne mit Wasser und wenigstens einmal jährlich wenigstens ein Ablassen des Wassers aus der Aufnahmewanne erfolgt. Insbesondere kann wenigstens ein Befüllen der Aufnahmewanne mit Wasser in der ersten Jahreshälfte, insbesondere im März und/oder April und/oder Mai und/oder Juni, und ein Ablassen des Wassers aus der Aufnahmewanne in der zweiten Jahreshälfte, insbesondere im August und/oder September und/oder Oktober und/oder November, erfolgen. Damit wird es erreicht, dass die Gewässervorrichtung während der Wintermonate trocken liegt und folglich keine oder weniger Tiere die Gewässervorrichtung bewohnen, so dass bei einer Wiederbefüllung der Gewässervorrichtung im Frühjahr ein für Amphibien mit (temporärer) Gewässerbindung, insbesondere Unken und die Wechselkröte, bevorzugter und gefahrenarmer - weil keine oder wenige Fressfeinde aufweisender - Lebensraum bereitgestellt werden kann.

Auch betrifft die Erfindung ein Verfahren zum Aufbau einer Gewässervorrichtung zur zumindest temporären Ansiedlung und/oder Beherbergung von Amphibien, in einer hierin beschriebenen Gewässervorrichtung wobei vorgesehen ist, dass ein Aufbau einer Aufnahmewanne durch zumindest abschnittsweises, insbesondere vollflächiges, schichtartiges Aufbringen einer ersten Schicht die zumindest abschnittsweise, insbesondere vollständig, aus einem Gussasphalt gebildet ist, erfolgt.

Sofern auf Grund von durch Sonneneinstrahlung und/oder Trockener Wetterverhältnisse die Wassermenge der Gewässervorrichtung einem kritischen Minimalwert annähern sollte, besteht die Möglichkeit Frischwasser zuzuführen. Sämtliche Vorteile, Einzelheiten, Ausführungen und/oder Merkmale der erfindungsgemäßen Gewässervorrichtung sind auf das erfindungsgemäße Verfahren übertragbar bzw. anzuwenden.

Die erfindungsgemäße Gewässervorrichtung und/oder das erfindungsgemäße Verfahren ist auch dahingehend vorteilhaft, dass geringere Unterhaltungspflegekosten erreicht werden. Beispielsweise wird bei emissionsbedingter Versottung des Beckenbelags und/oder bei Vegetationseintrag eine Reinigung auf einfache und komfortable Weise ermöglicht, wobei die Reinigung beispielsweise von ungeschultem Personal ausführt werden kann. Insbesondere die relativ glatte Oberfläche der Asphaltschicht (der ersten Schicht) ermöglicht ein durch Beaufschlagung mit unter Druck stehendem Wasser (Abspritzen) einen effizienten Reinigungsprozess, da die Hohlräume der obersten Schicht bzw. der Gerölllage (weitere Schicht) mit geringem Widerstand von störendem Material freigespült werden können. Damit stehen die freigespülten Hohlräume bzw. Deckungsräume unter der Gerölllage für eine relativ gefahrenlose - weil keine oder wenige Fressfeinde aufweisende - Wiederbesiedelung durch eine Zieltierart, insbesondere durch Unken und die Wechselkröte, zur Verfügung. Mit anderen Worten wird eine wirtschaftliche Reinigung der Gewässervorrichtung von Sedimenteintrag (z. B. durch Laub, Blütenstaub, Saharasand) ermöglicht.

Die Erfindung ist anhand von Ausführungsbeispielen in den Zeichnungen näher erläutert. Dabei zeigt:
Fig. 1 eine Prinzipdarstellung einer Gewässervorrichtung gemäß einem Ausführungsbeispiel;
Fig. 2 eine Prinzipdarstellung eines Schichtaufbaus einer Aufnahmewanne der Gewässervorrichtung gemäß einem Ausführungsbeispiel;
Fig. 3 eine Prinzipdarstellung der aufnahmevolumenseitigen Enden der ersten und zweiten Ablaufeinrichtungen;

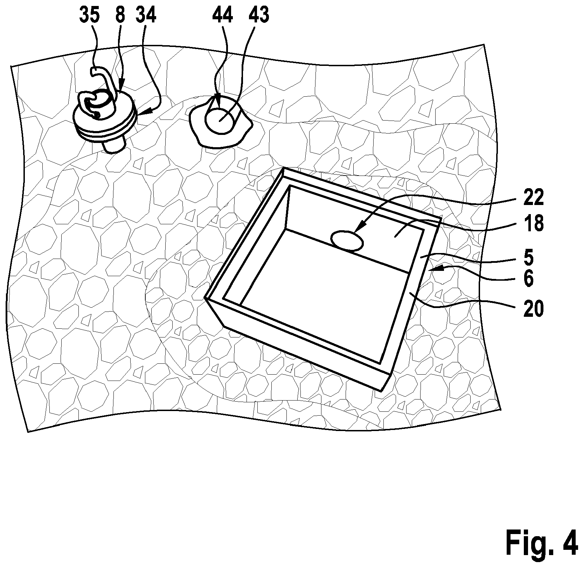

Fig. 4 eine Prinzipdarstellung aufnahmevolumenseitiger Enden der ersten, zweiten und dritten Ablaufeinrichtung in einem Zwischenmontagezustand;
Fig. 5 eine schematische Vollschnittdarstellung eines aufnahmevolumenseitigen ersten Endes einer ersten, als Grundablass dienenden Ablaufeinrichtung.

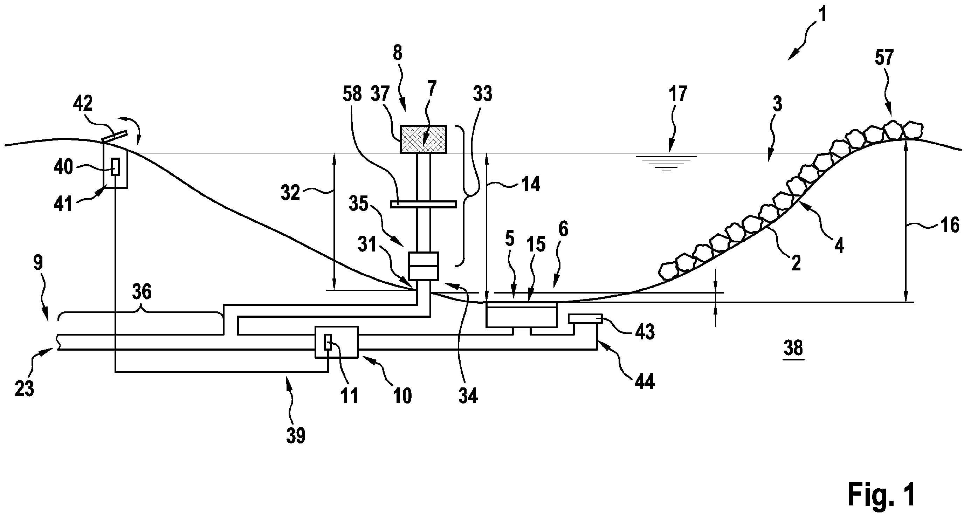

Figur 1 zeigt eine Gewässervorrichtung 1, zur zumindest temporären Ansiedlung und/oder Beherbergung von Amphibien, umfassend (a) eine zur Aufnahme von Wasser eingerichtete und mit wenigstens einer Aufnahmewandung 2 ein Aufnahmevolumen 3 definierende Aufnahmewanne 4, (b) eine mit einer Ablauföffnung 5, 7 ausgebildete Ablaufeinrichtung 6, 8, welche eingerichtet ist, über die Ablauföffnung 5, 7 in der Aufnahmewanne 4 befindliches Wasser zumindest temporär, insbesondere überwiegend oder vollständig, zu einem Auslassort 9 abzuleiten, (c) eine der Ablaufeinrichtung 6, 8 zugeordnete Schließeinrichtung 10, wobei die Schließeinrichtung 10 wenigstens ein Schließmittel 11 umfasst, welches zwischen einer die Ablaufeinrichtung 6, 8 verschließenden Verschlussstellung 12 und einer die Ablaufeinrichtung 6, 8 freigebenden und das in der Aufnahmewanne 4 befindliche Wasser zumindest teilweise, insbesondere vollständig, zu dem Auslassort 9 abfließen lassende Freigabestellung 12 verstellbar ist.

Die Gewässervorrichtung 1 weist wenigstens eine erste Ablaufeinrichtung 6 mit einer ersten Ablauföffnung 5 und wenigstens eine zweite Ablaufeinrichtung 8 mit einer zweiten Ablauföffnung 7 auf, wobei über die Ablauföffnungen Wasser aus der Aufnahmewanne 4 zumindest temporär zu wenigstens einem Auslassort 9 ableitbar ist und die erste und die zweite Ablauföffnung 5, 7 zueinander einen Abstand 14 aufweisen, insbesondere beträgt der Abstand 14 der ersten Ablauföffnung 5 zu der zweiten Ablauföffnung 7 mindestens ein Viertel, bevorzugt mindestens die Hälfte, besonders bevorzugt mindestens Dreiviertel der maximalen Wasserhöhe 16 von einem tiefsten Punkt 15 der Aufnahmewanne 4 zu einem Randbereich der Aufnahmewanne 4 bzw. des Aufnahmevolumens 3, hierbei kann der oberste Punkt des Randbereichs einen Referenzwert für die Höhe 16 der Aufnahmewanne 4 bilden. Alternativ oder zusätzlich kann der Referenzbereich den bestimmungsgemäßen Wasserpegel 17 entsprechen. Der bestimmungsgemäße Wasserpegel 17 entspricht der Höhe der zweiten, als Überlauf dienenden Ablauföffnung 7 der zweiten Ablaufeinrichtung 8.

Wie in Figur 1 dargestellt ist eine erste Ablaufeinrichtung 6 als Grundablasseinrichtung ausgebildet, derart, dass über diese in der Aufnahmewanne 4 befindliches Wasser zumindest temporär vollständig, zu einem Auslassort 9 ableitbar ist, wobei über die der ersten Ablaufeinrichtung 6 zugeordnete Schließeinrichtung 10 das Abfließen des Wassers über die erste Ablaufeinrichtung 6 zumindest temporär wahlweise sperrbar und freigebbar ist.

Die erste Ablauföffnung 5 der ersten Ablaufeinrichtung 6 ist in der in Figur 1 gezeigten Ausführungsform in einem Bodenbereich der Aufnahmewanne 4 und dort an einem tiefsten Punkt 15 der Aufnahmewanne 4 angeordnet oder ausgebildet ist.

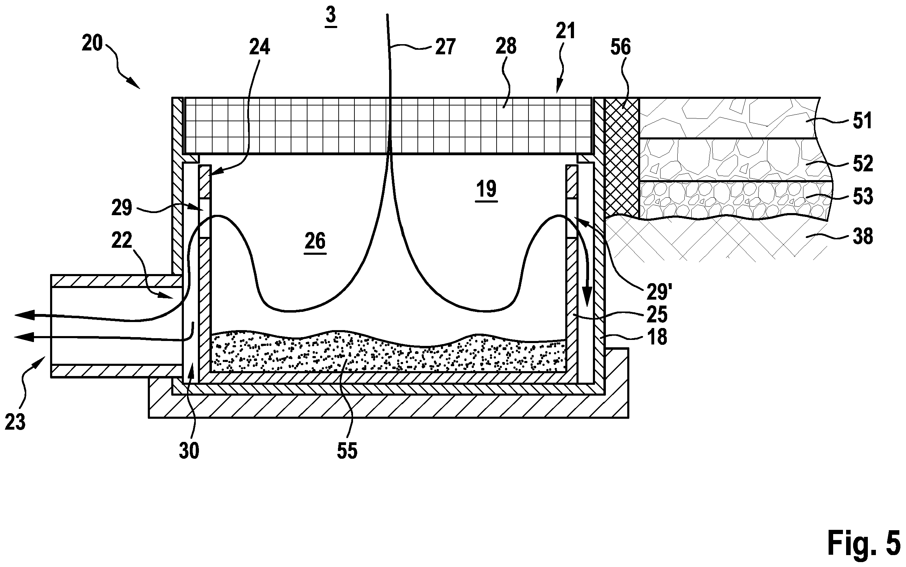

Die wenigstens eine Ablaufeinrichtung 6, 8, insbesondere die erste Ablaufeinrichtung 6, umfasst einen einen durch wenigstens eine Behälterwandungen 18 begrenzenden Behälterkörperinnenraum 19 definierenden Behälterkörper 20, wobei insbesondere der Behälterkörper 20 im Endmontagezustand eine zum Aufnahmevolumen 3 der Aufnahmewanne 4 ausgerichtete erste Behälteröffnung 21 aufweist, vgl. Figuren 1 und 5. Alternativ oder zusätzlich kann der Behälterkörper 20 eine zweite Behälteröffnung 22 aufweisen, durch welche in dem Behälterkörperinnenraum 19 befindliches Wasser zu einem Auslassort 9 ableitbar ist. Insbesondere kann das durch die zweite Behälteröffnung 22 hindurchtretende Wasser über eine sich an diese Behälteröffnung 22 anschließende Ablaufleitung und über deren Auslassöffnung 23 in die Umwelt austreten.

Wie insbesondere aus Figur 5 ersichtlich, ist in und/oder an dem Behälterkörper 20 zumindest abschnittsweise wenigstens ein Fangbehälter 24, insbesondere ein Schlammfangbehälter, angeordnet oder anordenbar, der derart eingerichtet ist, dass ein in einem durch Fangbehälterwandungen 25 definierten Fangbehälterinnenraum 26 befindliches Wasser zu dem Auslassort 9 ableitbar ist, wobei Fangstoffe (nicht dargestellt) in dem Fangbehälterinnenraum 26 zurückgehalten werden. Damit kann sich ein Weg für das von dem Aufnahmevolumen 3 abgeleitete Wasser entsprechend dem Pfeil 27 ergeben, wobei zunächst das Wasser von dem Aufnahmevolumen 3 durch ein ggf. montiertes Deckelelement 28 in einen Behälterkörperinnenraum 19 und in einen im Behälterkörperinnenraum 19 angeordneten Fangbehälterinnenraum 26 gelangt, hierbei durchtritt das Wasser die erste Behälterkörperöffnung 21. Innerhalb des Fangbehälterinnenraums 26 können sich im Wasser befindliche Schwebstoffe in einem Bodenbereich 55 des Fangbehälterinnenraums 26 absetzen. Das obenliegende, schwebstoffärmere Wasser kann über die Überlauföffnungen 29, 29' der Fangbehälterwandung 25 in einen, beispielsweise ringspaltartige geformten, Zwischenraum 30 gelangen und von dort über die zweite Behälteröffnung 22 in den sich an diese Behälteröffnung 22 anschließenden Ablaufkanal 23 zum Ablaufort 9 abgeleitet werden.

Ferner ist aus Figur 5 ersichtlich, dass in oder an, insbesondere auf, dem Behälterkörper 20 zumindest temporär ein zumindest abschnittsweise wasserdurchlässiges Deckelelement 28 zumindest temporär anordenbar bzw. lösbar befestigbar ist, bevorzugt ist das Deckelelement 28 gitterartig ausgebildet. Das Deckelelement 28 kann insbesondere im Fall einer von Wasser abgelassenen Aufnahmewanne 4 eingesetzt werden, um eine Verletzungsgefahr für die Aufnahmewanne 4 betretende Personen zu reduzieren bzw. zu bannen.

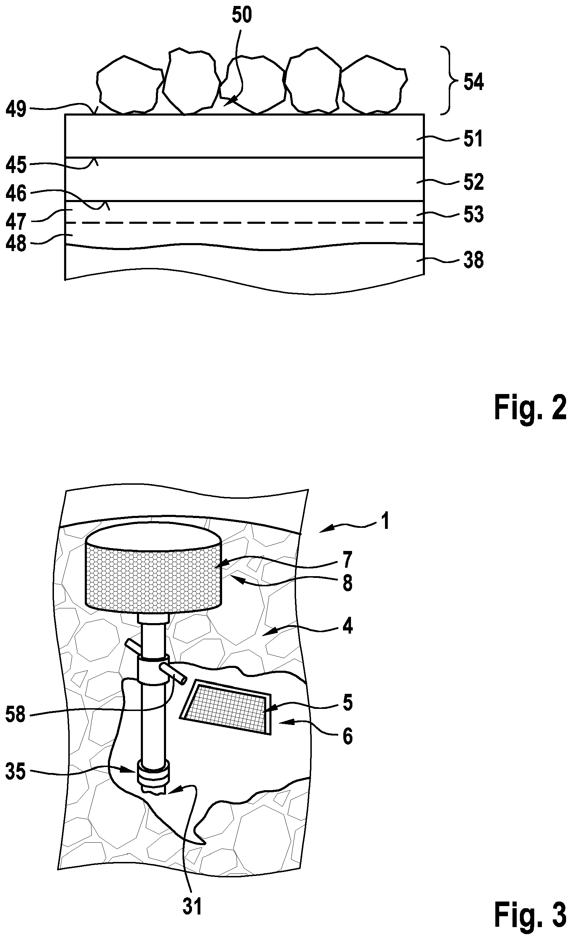

Gemäß der in den Figuren 1 und 3 gezeigten Ausführungsform kann eine Ablauföffnung 5, 7 einer Ablaufeinrichtung 6, 8, insbesondere die zweite Ablauföffnung 7 der zweiten Ablaufeinrichtung 8, in einer oberen Hälfte, bevorzugt in einem oberen Drittel, besonders bevorzugt in einem oberen Viertel, höchst bevorzugt in einem oberen Sechstel, der Höhe des tiefsten Punktes 15 der Aufnahmewanne 4 zu einem durch den Randbereich 31 definierten maximalen Wasserpegel (nicht dargestellt) und/oder auf Höhe des bestimmungsgemäßen maximalen Wasserpegels 17 des Aufnahmevolumens 3 bzw. der Aufnahmewanne 4 angeordnet oder ausgebildet sein. In der dargestellten Ausführungsform ist die zweite, als Überlauf dienende Ablauföffnung 7 der zweiten Ablaufeinrichtung 8 auf Höhe des bestimmungsgemäßen Wasserpegels 17 angeordnet oder ausgebildet.

Die Ablaufeinrichtung 6, 8, insbesondere die als Überlauf dienende zweite Ablauföffnung 7, ist höhenverlagerbar ausgebildet. Dabei besteht die Möglichkeit die Höhe der Ablauföffnung 7 relativ zu einem Bodenbereich 31 der Aufnahmewanne 4 zu verändern und vorzugsweise zu arretieren. Hierbei kann die Höhenverlagerbarkeit vorzugsweise derart realisiert sein, dass eine stufenlose Verstellung der Höhe 32 der Ablauföffnung 7 relativ zu einem Bodenbereich 31 der Aufnahmewanne 4 verstellbar ist.

Wenigstens eine Ablaufeinrichtung 6, 8, insbesondere die als Überlauf dienende zweite Ablaufeinrichtung 8, kann ein, insbesondere innerhalb des Aufnahmevolumens 3 angeordnetes oder ausgebildetes, Kupplungsmittel 35 zur lösbaren Befestigung eines ersten Ablaufeinrichtungsabschnitts 33 an einem weiteren Ablaufeinrichtungsabschnitt 34 umfassen. Durch das Kupplungsmittel 35, das wenigstens zwei lösbar miteinander verbindbare Kupplungselemente umfasst, kann die Ablaufeinrichtung zumindest temporär in wenigstens zwei Ablaufeinrichtungsabschnitte 33, 34 zerlegt und wieder in eine mediendichte Leitung zusammengesetzt werden. Insbesondere im Fall der Entwässerung der Aufnahmewanne, z. B. in den Wintermonaten, kann auf diese Weise der als Teil des Überlaufs dienende Ablaufeinrichtungsabschnitt 33 demontiert und in einem vorzugsweise trockenen und/oder insbesondere definiert temperierten Lagerraum gelagert werden. Auch eine Reinigung zumindest des demontierten Ablaufeinrichtungsabschnitt 33 kann im getrennten Zustand vereinfacht erfolgen.

Es kann ein Greifelement 58 zwischen dem Kupplungsmittel 35 und dem freien, stromauf des Kupplungsmittels 35 befindlichen Ende der Ablaufeinrichtung 6, 8 angeordnet oder ausgebildet sein. Das Greifelement 58 dient dazu manuell oder mittels eines Werkzeugs ein Drehmoment auf den stromauf des Kupplungsmittels 35 befindlichen und lösbaren Ablaufeinrichtungsabschnitt 33 einzubringen. Durch das hiermit eingebrachte Drehmoment kann das Kupplungsmittel 35 geöffnet oder geschlossen werden. Das Greifelement 58 erstreckt sich beispielsweise senkrecht und radial abstehend zu einem rohrartigen Abschnitt eines über das Kupplungsmittel 35 lösbaren Ablaufeinrichtungsabschnitt 33, vgl. Figuren 1 und 3.

Aus Figur 1 ist ersichtlich, dass zumindest abschnittsweise über einen gemeinsamen Ablaufleitungsabschnitt 36 Wasser aus dem Aufnahmevolumen 3 über die erste und die zweite Ablaufeinrichtung 6, 8 zu dem Auslassort 9 ableitbar ist. Der gemeinsame Ablaufleitungsabschnitt 36 ist hierbei stromab einer Schließeinrichtung 10, insbesondere stromab einer der ersten Ablaufeinrichtung 6 zugeordneten Schließeinrichtung 10, angeordnet oder ausgebildet, damit kann unabhängig von der Stellung des Schließmittels 11 der Schließeinrichtung 10 ein Ableiten von Wasser der zweiten Ablaufeinrichtung 8 bzw. Ablauföffnung 7 zuverlässig zum Auslassort 9 abgeleitet werden.

Eine Ablauföffnung 5, 7 der Ablaufeinrichtung 6, 8, insbesondere die als Teil des Überlaufs dienende zweite Ablauföffnung 7 der zweiten Ablaufeinrichtung 8, kann durch ein wasserdurchlässiges Schutzmittel 37 derart verschlossen sein, dass Fremdstoff (d. h. Feststoffe einer definierten Mindestgröße), insbesondere Blätter oder ähnliches, durch die Ablauföffnung 5, 7 nicht hindurchtreten können, vgl. Figur 3. Auch können frühe Entwicklungsstadien (z. B. Kaulquappen und/oder Larven) der an bzw. in der Gewässervorrichtung aufzuwachsenden Zieltiere bzw. Ziertierarten durch das Schutzmittel vor dem Eindringen in und einem Ableiten durch die Ablauföffnung bewahrt werden. Hierzu kann es vorgesehen sein, dass die Ablauföffnung 5, 7 mit einem siebartigen Element, beispielsweise einem Lochblech versehen ist, wobei die Löcher bzw. Öffnungen des Lochblechs eine definierte maximale Größe in deren lichten Weite bzw. in deren Durchmesser aufweisen. Beispielsweise wird ein Lochblech mit einem maximalen Lochdurchmesser von 6 mm, bevorzugt von 5 mm, besonders bevorzugt von maximaler Lochdurchmesser 4 mm, höchst bevorzugt von 2,5 mm, verwendet. Beispielsweise lässt sich ein Durchtritt von Kaulquappen und/oder Larven, insbesondere von Gelbbauchunken und/oder Wechselkörten, bei einem Lochdurchmesser von 2 mm signifikant reduzieren bzw. geringhalten.

Eine Schließeinrichtung 10, insbesondere eine der als Grundablauf dienenden zweiten Ablaufeinrichtung 8 zugeordnete Schließeinrichtung 10, kann zwischen einem Auslassort 9 und der Ablauföffnung 5, 7, insbesondere zwischen dem Auslassort 9 und der zweiten Ablauföffnung 7, angeordnet oder ausgebildet sein.

In einer bevorzugten Ausführungsform kann ein Schließmittel 11 der Schließeinrichtung 10 in einem unterhalb einer Erdoberfläche 38 platzierten, insbesondere unterhalb einer Aufnahmewanne 4 platzierten, ablaufeinrichtungsseitigen Leitungsabschnitt angeordnet oder ausgebildet, wobei bevorzugt das Schließmittel 11 vermittels eines Steuer- und/oder Regelungsmittels 39 zwischen einer Verschlussstellung und einer Freigabestellung verstellbar ist. Dabei kann eine Handhabe 40 zur manuellen oder werkzeuggestützten, Betätigung des Steuerungs- und/oder Regelungsmittels 39 im Bereich eines zumindest temporär frei zugänglichen Handhabungsbereichs 41 angeordnet oder ausgebildet sein, insbesondere ist der Handhabungsbereich 41 zumindest temporär durch eine Handhabungsbereichsabdeckung 42 zur Umwelt hin abdeckbar. Der Handhabungsbereich 41 kann ein durch Wandabschnitte ausgebildeter Raum sein, innerhalb dem die Handhabe 40 angeordnet. Der Handhabungsbereich 41 bzw. die Handhabe 40 kann im Bereich der Erdoberfläche 38 angeordnet sein. Beispielsweise schließt eine Handhabungsbereichsabdeckung 42, insbesondere im Wesentlichen, bündig mit die Handhabungsbereichsabdeckung 42 umgebenden Flächen der Gewässervorrichtung 1, insbesondere mit einer Oberfläche des Randbereichs 57 der Aufnahmewanne und/oder mit einer Oberfläche der Aufnahmewandung 2 ab. Beispielsweise ist der Handhabungsbereich 41 bzw. die Handhabe 40 horizontal außerhalb und/oder oberhalb zu einem durch den bestimmungsgemäßen Wasserpegel 17 definierten Wasservolumen und/oder durch den Randbereich 57 der Aufnahmewanne 4 definierten theoretischen Wasservolumen der Aufnahmewanne angeordnet oder ausgebildet.

Der Bau der Gewässervorrichtung 1 wird dadurch vereinfacht, dass eine zumindest temporär Wasser aus einem Wannenaufnahmevolumenmontagebereich zu einem Ablaufort 9 ableitende dritte Ablauföffnung 43 einer dritten Ablaufeinrichtung 44 vorgesehen ist, welche dort befindliches Wasser zu einem Auslassort 9 führt. Die dritte Ablauföffnung 43 ist dabei in einem tieferen Höhenniveau als die erste und die zweite Ablauföffnung 5, 7 angeordnet oder ausgebildet ist. Insbesondere wird die dritte Ablauföffnung 43 im Endmontagezustand durch einen Aufnahmewannenabschnitt überdeckt. Mit anderen Worten ist die dritte Ablauföffnung 43 im Endmontagezustand nicht mehr zugänglich bzw. nutzbar. Die dritte Ablauföffnung 43 dient lediglich zur Wasserableitung während des Bauprozesses der Gewässervorrichtung 1 und insbesondere zur Trockenlegung von mit asphaltenthaltenden Schichten 51, 52 zu versehenden Bereichen der Aufnahmewanne 4.

In Figur 2 ist der insbesondere schichtartige Aufbau der Aufnahmewanne 4 schematisch dargestellt. Dabei ist die Aufnahmewanne 4 zumindest abschnittsweise, insbesondere vollflächig, schichtartig aufgebaut. Eine erste Schicht 51 ist hierbei aus einem Gussasphalt ausgebildet. Dabei kann der Gussasphalt beispielsweise einen thermoplastischen Materialbestandteil und/oder einen Anteil an Bitumen von 2 bis 40 Masse-%, bevorzugt von 3 bis 30 Masse-%, besonders bevorzugt von 4 bis 20 Masse-% aufweisen. Die erste Schicht 51 kann eine Dichtungsschicht ausbilden, welche dazu dient, das in der Aufnahmewanne 4 befindliche Wasser zu halten.

Eine zweite Schicht 52, insbesondere eine an der dem Erdboden 38 zugewandten Oberfläche 45 der ersten Schicht 51 mittelbar oder unmittelbar angeordnete oder ausgebildete zweite Schicht 52, ist als Bitumen-Trag-Deckschicht ausgebildet.

Eine dritte Schicht 53, insbesondere eine an der dem Erdboden 38 zugewandten Oberfläche 45, 46 der ersten oder zweiten Schicht 51, 52 mittelbar oder unmittelbar angeordnete oder ausgebildete dritte Schicht 53, ist als Tragschicht ausbildet. Diese dritte Schicht 53 kann bevorzugt zumindest abschnittsweise, insbesondere vollständig, aus wenigstens einer ersten Tragschichtlage 47 aus Natursteinmaterial, insbesondere ein Natursteinmaterial mit einer Korngrößenverteilung/Sieblinie von 0/32 mm bis 0/64-XXX, und/oder aus wenigstens einer weiteren Tragschichtlage 48 aus Natursteinmaterial mit einer Korngröße von 0-4 mm und/oder einer Korngrößenverteilung/Sieblinie von 0,8 mm bis 0/22 mm gebrochenem Naturstein gebildet sein. Insbesondere wird für die erste Tragschichtlage 47 ein gebrochenes Natursteinmaterial mit einer Korngrößenverteilung/Sieblinie von 0/32 mm und/oder 0/45 mm verwendet. Für eine weiteren Tragschichtlage 48 kann beispielsweise gebrochenes Natursteinmaterial mit einer Korngröße von 0 bis 4 mm und/oder mit einer Korngrößenverteilung/Sieblinie 0/16 mm verwendet werden.

Eine weitere Schicht 54, insbesondere eine an der der Erdoberfläche 38 bzw. dem Erdboden abgewandten Oberfläche 49 der ersten Schicht 51 mittelbar oder unmittelbar angeordnete oder ausgebildete weitere Schicht 54, kann beispielsweise aus Steinmaterial, insbesondere Natursteinmaterial, mit einer Korngröße 50 bis 400 mm, insbesondere 75 bis 330 mm, besonders bevorzugt 90 bis 250 mm ausgebildet sein. Die weitere Schicht 54 ist als die obenliegende, vorzugsweise unmittelbar auf der ersten Schicht 51 aufliegende, Geröll- bzw. Natursteinlage ausgebildet. Durch die gewählte Korngröße der weiteren Schicht 54 bilden sich Hohlräume 50, insbesondere zu der Auflageschicht (erste Schicht 51), aus. Diese Hohlräume 50 können als Deckung bzw. als Rückzugsort für die an der Gewässervorrichtung 1 anzusiedelnden Zieltierarten dienen.

Das die weitere Schicht 54 bildende Material kann derart auf die erste Schicht 51 aufgebracht sein, dass die weitere Schicht 54 eine Lagenstärke von einer Kornstärke der weiteren Schicht 54 aufweist. Damit kann z. B. die Mächtigkeit der weiteren Schicht 54 eine Kornstärke von beispielsweise 50 bis 400 m, bevorzugt von 90 bis 250 mm aufweisen. Dadurch wird die Reinigung der durch die weitere Schicht 54 gebildeten Hohlräume 50 begünstigt, da ausreichend Spaltbereiche und Hohlräume 50 vorliegen, um Reinigungswasser mit ausreichendem Druck dort wirken zu lassen.

Eine Lagesicherung des die weitere Schicht 54 bildenden Materials kann durch Formschluss erreicht werden, beispielsweise verkanten bzw. berühren sich die innerhalb einer Lage aufgebrachten Steine gegenseitig und verhindern damit deren Verrutschen.

Insgesamt kann in einer bevorzugten Ausführungsform auf eine Erdoberfläche 38 unmittelbar eine aus zwei Tragschichtlagen 47, 48 gebildete dritte Schicht 53 (Tragschicht), auf der dritten Schicht 53 unmittelbar eine zweite Schicht 52 (Bitumen-Trag-Deckschicht), auf der zweiten Schicht 52 eine erste Schicht 51 (Gussasphalt und/oder Dichtungsschicht) und auf die erste Schicht 51 eine weitere Schicht 54 bzw. eine Steinhaufwerklage aufgebracht sein. Die erste, zweite und dritte bilden die Eigentliche das Wasser der Gewässervorrichtung 1 dichtend aufnehmende Aufnahmewanne 4, die weitere Schicht 54 dient zur Bildung von Hohlräumen 50 und weiterer für die Besiedelung der Gewässervorrichtung 1 durch Amphibien vorteilhafter Aspekte, z. B. abschnittsweise Vergrößerung Oberfläche bzw. der Oberflächenrauheit.

Es ist möglich, dass an wenigstens einer, insbesondere an sämtlichen, Durchdringung der Aufnahmewanne 4, d. h. z. B. an der Durchdringung des Behälterkörpers 20, des Handhabungsbereichs 41 und/oder der zweiten Ablaufeinrichtung 8 durch die Aufnahmewanne 4 eine Dichtmasse 56 bzw. Vergussmasse, insbesondere durch eine Heiß-Fugenvergussmasse, verschlossen bzw. abgedichtet wird, vgl. Figur 5.

Die der vierten Schicht 54 zugewandte Oberfläche 49 der ersten Schicht 51 kann relativ glatt ausgebildet sein, derart, dass im Falle der Beaufschlagung von auf der Oberfläche 49 liegendem Unrat bzw. zu entfernendem Material durch unter Druck stehendes Wasser (z. B. Hochdruckwasser) dieses Material wenig Halt auf der Oberfläche 49 findet und sich entsprechend leicht entfernen lässt. Eine relativ glatte Oberfläche 49 kann hierbei beispielsweise bedeuten, dass diese einen Rutschsicherheitsfaktor von R13, bevorzugt von weniger als R13, besonders bevorzugt von weniger als R12, höchst bevorzugt von weniger als R11 aufweist. Alternativ oder zusätzlich ist eine glatte Oberfläche 49 der asphaltbestandteileaufweisenden ersten Schicht 51 (z. B. Asphaltmastixschicht) dadurch zu erreichen, dass diese nicht mit körnigem Material, insbesondere nicht mit Sand, abgestreut wird.

Die erste und/oder die zweite, Asphalt oder Asphaltbestandteile aufweisende Schicht 51, 52 kann bzw. können vorzugsweise aus sortenreinem Material gebildet sein. Dies erhöht den, einer derartigen beispielsweise aus Naturschutzbedürfnissen ausgestalteten Gewässervorrichtung 1, ökologischen Fingerabdruck, da im Falle eines Abriss bzw. Rückbau der Gewässervorrichtung 1 diese gänzlich oder zumindest zu einem höheren Grad (insbesondere auch bei strengen Umweltauflagen) recycelbar ist. Als sortenreines Material ist insbesondere Asphaltmaterial zu verstehen, das keine oder kaum (d. h. kleiner 5 Vol.-%) recycelte bzw. wiederverwertete Materialanteile, insbesondere keine oder kaum Abfälle wie beispielsweise Gummiabrieb bei rezyklierten Autobahnasphalt (auch als Fräsgut bezeichnet) als Materialbestandteil, enthält. Die Gewässervorrichtung 1 ist derart ausgebildet, dass diese zumindest abschnittsweise, insbesondere vollständig, durch ein Fahrzeug (nicht dargestellt), insbesondere durch ein Nutzfahrzeug, befahrbar ist. Hierbei ist zumindest im Endmontagezustand das Deckelelement 28 und/oder der Behälterkörper 20 und/oder die erste Ablaufeinrichtung 6 und/oder die zweite Ablaufeinrichtung 8 und/oder die Aufnahmewanne 4 zumindest abschnittsweise oder vollständig mit einem Fahrzeug, insbesondere einem Nutzfahrzeug, befahrbar.

Das erfindungsgemäße Verfahren zum Betrieb einer Gewässervorrichtung 1 zur zumindest temporären Ansiedlung und/oder Beherbergung von Amphibien, in einer hierin beschriebenen Gewässervorrichtung 1 zeichnet sich durch folgende Verfahrensschritte aus: (a) Befüllen einer Aufnahmewanne 4 der Gewässervorrichtung 1 mit Wasser, insbesondere mit Frischwasser, (b) Auslassen des Wassers aus der Aufnahmewanne 4 zu einem Auslassort 9 über eine mit einer Ablauföffnung 5, 7 ausgebildeten Ablaufeinrichtung 6, 8 vermittels eines zumindest temporären Freigeben einer Ablaufeinrichtung 6, 8 einer gewässervorrichtungsseitigen durch verstellen eines Schließmittels 11 einer Schließeinrichtung 10 von einer Verschlussstellung 12 in eine Freigabestellung 13.

### BEZUGSZEICHENLISTE

- 1: Gewässervorrichtung
- 2: Aufnahmewandung
- 3: Aufnahmevolumen
- 4: Aufnahmewanne
- 5: erste Ablauföffnung
- 6: erste Ablaufeinrichtung
- 7: zweite Ablauföffnung
- 8: zweite Ablaufeinrichtung
- 9: Auslassort
- 10: Schließeinrichtung
- 11: Schließmittel
- 14: Abstand zwischen 15 und 17
- 15: tiefster Punkt von 4
- 16: Höhe von 15 zu 4
- 17: bestimmungsgemäßer Wasserpegel
- 18: Behälterwandung
- 19: Behälterkörperinnenraum
- 20: Behälterkörper
- 21: erste Behälteröffnung
- 22: zweite Behälteröffnung
- 23: Auslassöffnung
- 24: Fangbehälter
- 25: Fangbehälterwandung
- 26: Fangbehälterinnenraum
- 27: Pfeil
- 28: Deckelelement
- 29, 29': Überlauföffnung
- 30: Zwischenraum
- 31: Bodenbereich
- 32: Höhe zwischen 7 und 31
- 33: erster Ablaufeinrichtungsabschnitt
- 34: zweiter Ablaufeinrichtungsabschnitt
- 35: Kupplungsmittel
- 36: gemeinsamer Ablaufeinrichtungsabschnitt
- 37: Schutzmittel
- 38: Erdoberfläche
- 39: Steuerungs- und/oder Regelungsmittel
- 40: Handhabe
- 41: Handhabungsbereich
- 42: Handhabungsbereichsabdeckung
- 43: dritte Ablauföffnung
- 44: dritte Ablaufeinrichtung
- 45: Oberfläche von 51
- 46: Oberfläche von 52
- 47: erste Tragschichtlage
- 48: weitere Tragschichtlage
- 49: Oberfläche von 51
- 50: Hohlraum
- 51: erste Schicht
- 52: zweite Schicht
- 53: dritte Schicht
- 54: weitere Schicht
- 55: Bodenbereich
- 56: Dichtmasse
- 57: Randbereich von 4

## Patentansprüche

1. Gewässervorrichtung (1), zur zumindest temporären Ansiedlung von Amphibien, umfassend
- eine zur Aufnahme von Wasser eingerichtete und mit wenigstens einer Aufnahmewandung (2) ein Aufnahmevolumen (3) definierende Aufnahmewanne (4),
- eine mit einer Ablauföffnung (5, 7) ausgebildete Ablaufeinrichtung (6, 8), welche eingerichtet ist, über die Ablauföffnung (5, 7) in der Aufnahmewanne (4) befindliches Wasser zumindest temporär, insbesondere überwiegend oder vollständig, zu einem Auslassort (9) abzuleiten, sowie
- eine der Ablaufeinrichtung (6, 8) zugeordnete Schließeinrichtung (10), wobei die Schließeinrichtung (10) wenigstens ein Schließmittel (11) umfasst, welches zwischen einer die Ablaufeinrichtung (6, 8) verschließenden Verschlussstellung und einer die Ablaufeinrichtung freigebenden und das in der Aufnahmewanne (4) befindliche Wasser zumindest teilweise, insbesondere vollständig, zu dem Auslassort (9) abfließen lassende Freigabestellung verstellbar ist, wobei
- die Aufnahmewanne (4) zumindest abschnittsweise, insbesondere vollflächig, einen schichtartigen Aufbau aufweist, wobei wenigstens eine erste Schicht (51) zumindest abschnittsweise, insbesondere vollständig, aus einem Gussasphalt gebildet ist, bevorzugt weist der Gussasphalt einen thermoplastischen Materialbestandteil und/oder einen Anteil an Bitumen von 2 bis 40 Masse-%, besonders bevorzugt von 3 bis 30 Masse-%, höchst bevorzugt von 4 bis 20 Masse-%, auf, wobei
- eine zweite Schicht (52) eine, die Funktion einer Trag- und einer Deckschicht aufweisende Bitumen-Trag-Deckschicht ausbildet.

2. Gewässervorrichtung (1) nach Anspruch 1, **dadurch gekennzeichnet, dass** eine an der dem Erdboden (38) zugewandten Oberfläche (45) der ersten Schicht (51) mittelbar oder unmittelbar angeordnete oder ausgebildete zweite Schicht (52) eine Bitumen-Trag-Deckschicht ausbildet.

3. Gewässervorrichtung (1) nach Anspruch 1 oder 2, **dadurch gekennzeichnet, dass** eine dritte Schicht (53), insbesondere eine an der dem Erdboden (38) zugewandten Oberfläche (45, 46) der ersten oder zweiten Schicht (51, 52) mittelbar oder unmittelbar angeordnete oder ausgebildete dritte Schicht (53), eine Tragschicht ausbildet, bevorzugt wird die Tragschicht aus wenigstens einer ersten Tragschichtlage (47) aus Natursteinmaterial, insbesondere ein Natursteinmaterial mit einer Korngrößenverteilung/Sieblinie von 0/32 mm bis 0/64-XXX, und/oder aus wenigstens einer weiteren Tragschichtlage (48) aus Natursteinmaterial mit einer Korngröße von 0-4 mm und/oder einer Korngrößenverteilung/Sieblinie von 0,8 mm bis 0/22 mm gebrochenem Naturstein gebildet.

4. Gewässervorrichtung (1) nach einem der vorhergehenden Ansprüche, **dadurch gekennzeichnet, dass** eine weitere Schicht (54), insbesondere eine an der dem Erdboden (38) abgewandten Oberfläche (49) der ersten Schicht (51) mittelbar oder unmittelbar angeordnete oder ausgebildete weitere Schicht (54), aus Steinmaterial, insbesondere Natursteinmaterial, mit einer Korngröße von 50 bis 400 mm, bevorzugt von 75 bis 330 mm, besonders bevorzugt von 90 bis 250 mm ausgebildet ist.

5. Gewässervorrichtung (1) nach einem der vorhergehenden Ansprüche, **gekennzeichnet durch** wenigstens eine erste Ablaufeinrichtung (6) mit einer ersten Ablauföffnung (5) und wenigstens eine zweite Ablaufeinrichtung (8) mit einer zweiten Ablauföffnung (7), wobei über die Ablauföffnungen (5, 7) Wasser aus der Aufnahmewanne (4) zumindest temporär zu wenigstens einem Auslassort (9) ableitbar ist und die erste und die zweite Ablauföffnung (5, 7) zueinander einen Abstand (14) aufweisen, insbesondere beträgt der Abstand (14) der ersten und zweiten Ablauföffnung (5, 7) mindestens ein Viertel, bevorzugt mindestens die Hälfte, besonders bevorzugt mindestens Dreiviertel der maximalen Wasserhöhe (16) von einem tiefsten Punkt (15) des Aufnahmevolumens (3) und/oder der Aufnahmewanne (4) zu einem die Höhe der Aufnahmewanne (4) betreffenden Referenzwert, insbesondere einem bestimmungsgemäßen Wasserpegel (17) des Aufnahmevolumens (3).

6. Gewässervorrichtung (1) nach einem der vorhergehenden Ansprüche, **dadurch gekennzeichnet, dass** eine erste Ablaufeinrichtung (6), insbesondere eine als Grundablasseinrichtung ausgebildete erste Ablaufeinrichtung (6), derart eingerichtet ist, dass über diese in der Aufnahmewanne (4) befindliches Wasser zumindest temporär, insbesondere überwiegend oder vollständig, zu einem Auslassort (9) ableitbar ist, wobei über die der ersten Ablaufeinrichtung (6) zugeordnete Schließeinrichtung (10) das Abfließen des Wassers über die erste Ablaufeinrichtung (6) zumindest temporär sperrbar ist.

7. Gewässervorrichtung (1) nach Anspruch 5 oder 6, **dadurch gekennzeichnet, dass** die erste Ablauföffnung (5) der ersten Ablaufeinrichtung (6) in einem unteren Drittel, bevorzugt in einem unteren Viertel, der maximalen Wasserhöhe (16) von einem tiefsten Punkt (15) des Aufnahmevolumens (3) zu einem die Höhe der Aufnahmewanne (4) betreffenden Referenzwert, insbesondere einem bestimmungsgemäßen Wasserpegel (17) der Aufnahmewanne (4), angeordnet oder ausgebildet ist, besonders bevorzugt ist die erste Ablauföffnung (5) der ersten Ablaufeinrichtung (6) in einem Bodenbereich der Aufnahmewanne (4), höchst bevorzugt an einem tiefsten Punkt (15) der Aufnahmewanne (4) angeordnet oder ausgebildet ist.

8. Gewässervorrichtung (1) nach einem der vorhergehenden Ansprüche, **dadurch gekennzeichnet, dass** eine Ablauföffnung (5, 7) einer Ablaufeinrichtung (6, 8), insbesondere die zweite Ablauföffnung (7) der zweiten Ablaufeinrichtung (8), in einer oberen Hälfte, bevorzugt in einem oberen Drittel, besonders bevorzugt in einem oberen Viertel, höchst bevorzugt in einem oberen Sechstel, der Höhe (16) des tiefsten Punktes (15) der Aufnahmewanne (4) zu einem Randbereich der Aufnahmewanne (4) und/oder auf Höhe eines bestimmungsgemäßen Wasserpegels (17) des Aufnahmevolumens (3) angeordnet oder ausgebildet ist.

9. Gewässervorrichtung (1) nach einem der vorhergehenden Ansprüche, **dadurch gekennzeichnet, dass** eine Ablauföffnung (5, 7), insbesondere die zweite Ablauföffnung (7), höhenverlagerbar, bevorzugt relativ zu einem Bodenbereich (31) der Aufnahmewanne (4), ausgebildet ist, besonders bevorzugt ist die Ablauföffnung (7) stufenlos in deren Höhe (32) zu einem Bodenbereich (31) der Aufnahmewanne (4) anordenbar.

10. Gewässervorrichtung (1) nach einem der Ansprüchen 5 bis 9, **dadurch gekennzeichnet, dass** zumindest abschnittsweise über einen gemeinsamen Ablaufleitungsabschnitt (36) Wasser aus dem Aufnahmevolumen (3) über die erste und die zweite Ablaufeinrichtung (6, 8) zu einem Auslassort (9) ableitbar ist, insbesondere ist der gemeinsame Ablaufleitungsabschnitt (36) stromab einer Schließeinrichtung (10), insbesondere stromab einer der ersten Ablaufeinrichtung (6) zugeordneten Schließeinrichtung (10), angeordnet oder ausgebildet.

11. Gewässervorrichtung (1) nach einem der vorhergehenden Ansprüche, **dadurch gekennzeichnet, dass** die Schließeinrichtung (10), insbesondere eine der zweiten Ablaufeinrichtung (8) zugeordnete Schließeinrichtung, (10) zwischen einem Auslassort (9) und der Ablauföffnung (5, 7), insbesondere zwischen dem Auslassort (9) und der zweiten Ablauföffnung (7), angeordnet oder ausgebildet ist, bevorzugt ist ein Schließmittel (11) der Schließeinrichtung (10) in einem unterhalb einer Erdoberfläche (38) platzierten, insbesondere unterhalb einer Aufnahmewanne (4) platzierten, ablaufeinrichtungsseitigen Leitungsabschnitt angeordnet oder ausgebildet, wobei besonders bevorzugt das Schließmittel (11) vermittels eines Steuer- und/oder Regelungsmittels (39) zwischen einer Verschlussstellung und einer Freigabestellung verstellbar ist.

12. Gewässervorrichtung (1) nach einem der vorhergehenden Ansprüche, **gekennzeichnet durch** eine zumindest temporär Wasser aus einem Wannenaufnahmevolumenmontagebereich zu einem Ablassort (9) ableitende dritte Ablauföffnung (43) einer dritten Ablaufeinrichtung (44), wobei die dritte Ablauföffnung (43) in einem tieferen Höhenniveau als die erste und die zweite Ablauföffnung (6, 8) angeordnet oder ausgebildet ist, insbesondere wird die dritte Ablauföffnung (43) im Endmontagezustand durch einen Aufnahmewannenabschnitt überdeckt.

13. Gewässervorrichtung (1) nach einem der vorhergehenden Ansprüche, **dadurch gekennzeichnet, dass** die Gewässervorrichtung (1) derart ausgebildet ist, dass diese zumindest abschnittsweise, insbesondere vollständig, durch ein Fahrzeug, insbesondere durch ein Nutzfahrzeug, befahrbar ist, bevorzugt ist zumindest im Endmontagezustand das Deckelelement (28) und/oder der Behälterkörper (20) und/oder die erste Ablaufeinrichtung (6) und/oder die zweite Ablaufeinrichtung (8) und/oder die Aufnahmewanne (4) zumindest abschnittsweise oder vollständig mit einem Fahrzeug, insbesondere einem Nutzfahrzeug, befahrbar.

14. Verfahren zum Aufbau einer Gewässervorrichtung (1) zur zumindest temporären Ansiedlung von Amphibien in einer Gewässervorrichtung (1) nach einem der vorhergehenden Ansprüche, **gekennzeichnet durch** Aufbau einer Aufnahmewanne (4) durch zumindest abschnittsweises, insbesondere vollflächiges, schichtartiges Aufbringen einer ersten Schicht (51) die zumindest abschnittsweise, insbesondere vollständig, aus einem Gussasphalt gebildet ist.

## Claims

1. Water apparatus (1) for at least temporary settlement of amphibians, comprising
- a receiving trough (4) which is configured for receiving water and, by means of at least one receiving wall (2), defines a receiving volume (3),
- an outflow device (6, 8) which is formed having an outflow opening (5, 7) and is configured to conduct water, located in the receiving trough (4), at least temporarily, in particularly largely or completely, to an outlet location (9) via the outflow opening (5, 7), and
- a closure device (10) which is associated with the outflow device (6, 8), wherein the closure device (10) comprises at least one closure means (11) which is adjustable between a closed position which closes the outflow device (6, 8), and a release position which releases the outflow device and allows the water, located in the receiving trough (4), to flow out to the outlet location (9) at least in part, in particular completely, wherein
- the receiving trough (4) has a layer-like structure at least in portions, in particular over the entire surface, wherein at least a first layer (51) is formed at least in portions, in particular completely, of a poured asphalt, the poured asphalt preferably has a thermoplastic material component and/or a fraction of bitumen of 2 to 40% by mass, particularly preferably of 3 to 30% by mass, most preferably of 4 to 20% by mass, wherein
- a second layer (52) forms a bitumen carrier/cover layer which has the function of a carrier and a cover layer.

2. Water apparatus (1) according to claim 1, **characterised in that** a second layer (52), which is arranged or formed indirectly or directly on the surface (45) of the first layer (51) that faces the ground (38), forms a bitumen carrier/cover layer.

3. Water apparatus (1) according to either claim 1 or claim 2, **characterised in that** a third layer (53), in particular a third layer (53) which is arranged or formed indirectly or directly on the surface (45, 46) of the first or second layer (51, 52) that faces the ground (38), forms a carrier layer, the carrier layer is preferably formed of at least one first carrier layer ply (47) made of natural stone material, in particular a natural stone material having a particle size distribution/grading curve of 0/32 mm to 0/64-XXX, and/or of at least one further carrier layer ply (48) made of natural stone material having a particle size of 0-4 mm and/or a particle size distribution/grading curve of 0.8 mm to 0/22 mm broken natural stone.

4. Water apparatus (1) according to any of the preceding claims, **characterised in that** a further layer (54), in particular a further layer (54) which is arranged or formed indirectly or directly on the surface (49) of the first layer (51) that faces the ground (38), made of stone material, in particular natural stone material, having a particle size of 50 to 400 mm, preferably of 75 to 330 mm, particularly preferably of 90 to 250 mm, is formed.

5. Water apparatus (1) according to any of the preceding claims, **characterised by** at least one first outflow device (6) having a first outflow opening (5), and at least one second outflow device (8) having a second outflow opening (7), wherein water can be conducted out of the receiving trough (4), at least temporarily to at least one outlet location (9), via the outflow openings (5, 7), and the first and the second outflow opening (5, 7) are at a distance (14) from one another, in particular the distance (14) of the first and second outflow opening (5, 7) is at least a quarter, preferably at least half, particularly preferably at least three-quarters, of the maximum water height (16) from a deepest point (15) of the receiving volume (3) and/or the receiving trough (4) to a reference value relating to the height of the receiving trough (4), in particular an intended water level (17) of the receiving volume (3).

6. Water apparatus (1) according to any of the preceding claims, **characterised in that** a first outflow device (6), in particular a first outflow device (6) configured as a ground outlet device, is configured in such a way that the water located in the receiving trough (4) can be conducted away, at least temporarily, in particular largely or completely, to an outlet location (9), via said outflow device, wherein the outflow of the water via the first outflow device (6) can be blocked at least temporarily by the closure device (10) associated with the first outflow device (6).

7. Water apparatus (1) according to either claim 5 or claim 6, **characterised in that** the first outflow opening (5) of the first outflow device (6) is arranged or formed in a bottom third, preferably in a bottom quarter, of the maximum water height (16) from a deepest point (15) of the receiving volume (3) to a reference value relating to the height of the receiving trough (4), in particular an intended water level (17) of the receiving trough (4), particularly preferably the first outflow opening (5) of the first outflow device (6) is arranged or formed in a base region of the receiving trough (4) most preferably at a deepest point (15) of the receiving trough (4).

8. Water apparatus (1) according to any of the preceding claims, **characterised in that** an outflow opening (5, 7) of an outflow device (6, 8), in particular the second outflow opening (7) of the second outflow device (8), is arranged or formed in a top half, preferably a top third, particularly preferably in a top quarter, most preferably in a top sixth, of the height (16) from the deepest point (15) of the receiving trough (4) to an edge region of the receiving trough (4) and/or at the height of an intended water level (17) of the receiving volume (3).

9. Water apparatus (1) according to any of the preceding claims, **characterised in that** an outflow opening (5, 7), in particular the second outflow opening (7), is configured so as to be height-adjustable, preferably relative to a base region (31) of the receiving trough (4), particularly preferably the outflow opening (7), particularly preferably the outflow opening (7) can be arranged steplessly, in height (32), with respect to a base region (31) of the receiving trough (4).

10. Water apparatus (1) according to any of claims 5 to 9, **characterised in that** water can be conducted out of the receiving volume (3), via the first and the second outflow device (6, 8), to an outlet location (9), via a common outflow line portion (36), in particular the common outflow line portion (36) is arranged or formed downstream of a closure device (10) associated with the first outflow device (6).

11. Water apparatus (1) according to any of the preceding claims, **characterised in that** the closure device (10), in particular a closure device (10) associated with the second outflow device (8), is arranged or formed between an outlet location (9) and the outflow opening (5, 7), in particular between the outlet location (9) and the second outflow opening (7), preferably a closure means (11) of the closure device (10) is arranged or formed in an outflow device-side line portion placed under an earth surface (38), in particular placed under a receiving trough (4), wherein the closure means (11) is particularly preferably adjustable, by means of a control means (39), between a closed position and a release position.

12. Water apparatus (1) according to any of the preceding claims, **characterised by** a third outflow opening (43) of a third outflow device (44), which outflow opening conducts water, at least temporarily, out of a trough receiving volume mounting region to an outlet location (9), wherein the third outflow opening (43) is arranged or formed at a lower height level than the first and the second outflow opening (6, 8), in particular the third outflow opening (43) is covered, in the end mounting state, by a receiving trough portion.

13. Water apparatus (1) according to any of the preceding claims, **characterised in that** the water apparatus (1) is configured such that it can be moved at least in portions, in particular completely, by a vehicle, in particular by a utility vehicle, preferably, at least in the end mounting state, the cover element (28) and/or the container body (20) and/or the first outflow device (6) and/or the second outflow device (8) and/or the receiving trough (4) is movable, at least in portions or completely, by means of a vehicle, in particular a utility vehicle.

14. Method for constructing a water apparatus (1) for at least temporary settlement of amphibians in a water apparatus (1) according to any of the preceding claims, **characterised by** the construction of a receiving trough (4) by layer-like application, at least in portions, in particular over the entire surface, of a first layer (51) which is formed at least in portions, in particular completely, of a poured asphalt.

## Revendications

1. Dispositif d'eau (1) destiné à la colonisation au moins temporaire d'amphibiens, comprenant
- une cuve de réception (4) mise au point pour recevoir de l'eau et définissant un volume de réception (3) avec au moins une paroi de réception (2),
- un système d'évacuation (6, 8) réalisé avec une ouverture d'évacuation (5, 7), lequel est mis au point pour évacuer au moins temporairement, en particulier en majorité ou en totalité, vers un lieu de sortie (9) de l'eau se trouvant dans la cuve de réception (4) par l'intermédiaire de l'ouverture d'évacuation (5, 7), ainsi
- qu'un système de fermeture (10) associé au système d'évacuation (6, 8), dans lequel le système de fermeture (10) comprend au moins un moyen de fermeture (11), lequel peut être ajusté entre une position de fermeture fermant le système d'évacuation (6, 8) et une position de déblocage débloquant le système d'évacuation et permettant l'évacuation au moins partielle, en particulier totale, vers un lieu de sortie (9) de l'eau se trouvant dans la cuve de réception (4), dans lequel
- la cuve de réception (4) présente au moins par endroits, en particulier sur la totalité de la surface, une structure à couches, dans lequel au moins une première couche (51) est formée au moins par endroits, en particulier en totalité, à partir d'un asphalte coulé, l'asphalte couplé présente de manière préférée un constituant de matériau thermoplastique et/ou une fraction de bitume de 2 à 40 % en poids, de manière préférée de 3 à 30 % en poids, de manière préférée au maximum de 4 à 20 % en poids, dans lequel
- une deuxième couche (52) réalise la couche de recouvrement de support de bitume présentant la fonction d'une couche de support et d'une couche de recouvrement.

2. Dispositif d'eau (1) selon la revendication 1, **caractérisé en ce qu'**une deuxième couche (52) disposée ou réalisée indirectement ou directement sur la surface (45), tournée vers le sol (38), de la première couche (51) réalise une couche de recouvrement de support de bitume.

3. Dispositif d'eau (1) selon la revendication 1 ou 2, **caractérisé en ce qu'**une troisième couche (53), en particulier une troisième couche (53) disposée ou réalisée indirectement ou directement sur la surface (45, 46), tournée vers le sol (38), de la première ou de la deuxième couche (51, 52), réalise une couche de support, de manière préférée la couche de support est formée à partir d'au moins une première strate de couche de support (47) composée d'un matériau en pierre naturelle, en particulier un matériau en pierre naturelle avec une distribution granulométrique/courbe granulométrique de 0/32 mm à 0/64-XXX, et/ou à partir d'au moins une autre strate de couche de support (48) composée de matériau en pierre naturelle avec une granulométrie de 0-4 mm et/ou d'une distribution granulométrique/courbe granulométrique de 0,8 mm à 0/22 mm de pierre cassée.

4. Dispositif d'eau (1) selon l'une quelconque des revendications précédentes, **caractérisé en ce qu'**une autre couche (54), en particulier une autre couche (54) disposée ou réalisée indirectement ou directement sur la surface (49), opposée au sol (38), de la première couche (51) est réalisée à partir de matériau en pierre, en particulier de matériau en pierre naturelle, avec une granulométrie de 50 à 400 mm, de manière préférée de 75 à 330 mm, de manière particulièrement préférée de 90 à 250 mm.

5. Dispositif d'eau (1) selon l'une quelconque des revendications précédentes, **caractérisé par** au moins un premier système d'évacuation (6) avec une première ouverture d'évacuation (5) et au moins un deuxième système d'évacuation (8) avec une deuxième ouverture d'évacuation (7), dans lequel de l'eau provenant de la cuve de réception (4) peut être déviée au moins temporairement vers au moins un lieu de sortie (9) par l'intermédiaire des ouvertures d'évacuation (5, 7) et la première et la deuxième ouverture de sortie (5, 7) présentent l'une par rapport à l'autre une distance (14), en particulier la distance (14) de la première et de la deuxième ouverture de sortie (5, 7) représente en particulier un quart, de manière préférée au moins la moitié, de manière particulièrement préférée au moins les trois quarts de la hauteur d'eau maximale (16) depuis un point le plus bas (15) du volume de réception (3) et/ou de la cuve de réception (4) vers une valeur de référence concernant la hauteur de la cuve de réception (4), en particulier un niveau d'eau (17) conforme à l'usage prévu du volume de réception (3).

6. Dispositif d'eau (1) selon l'une quelconque des revendications précédentes, **caractérisé en ce qu'**un premier système d'évacuation (6), en particulier un premier système d'évacuation (6) réalisé en tant que système de sortie de base, est mis au point de telle manière que de l'eau se trouvant dans la cuve de réception (4) peut être déviée par l'intermédiaire de celui-ci au moins temporairement, en particulier en grande majorité ou en totalité, vers un lieu de sortie (9), dans lequel l'écoulement sortant de l'eau par l'intermédiaire du premier système d'évacuation (6) peut être bloqué au moins temporairement par l'intermédiaire du système de fermeture (10) associé au premier système d'évacuation (6).

7. Dispositif d'eau (1) selon la revendication 5 ou 6, **caractérisé en ce que** la première ouverture d'évacuation (5) du premier système d'évacuation (6) est disposée ou réalisée dans un tiers inférieur, de manière préférée dans un quart inférieur, de la hauteur de l'eau maximale (16) d'un point le plus bas (15) du volume de réception (3) vers une valeur de référence concernant la hauteur de la cuve de réception (4), en particulier un niveau d'eau (17) conforme à l'usage prévu de la cuve de réception (4), la première ouverture d'évacuation (5) du premier système d'évacuation (6) est disposée ou réalisée dans une zone de fond de la cuve de réception (4), de manière préférée au maximum sur un point le plus bas (15) de la cuve de réception (4).

8. Dispositif d'eau (1) selon l'une quelconque des revendications précédentes, **caractérisé en ce qu'**une ouverture d'évacuation (5, 7) d'un système d'évacuation (6, 8), en particulier la deuxième ouverture d'évacuation (7) du deuxième système d'évacuation (8) est disposée ou réalisée dans une moitié supérieure, de manière préférée dans un tiers supérieur, de manière particulièrement préférée dans un quart supérieur, de manière préférée au maximum dans un sixième supérieur, de la hauteur (16) du point le plus bas (15) de la cuve de réception (4) vers une zone de bord de la cuve de réception (4) et/ou à hauteur d'un niveau d'eau (17) conforme à l'usage prévu du volume de réception (3).

9. Dispositif d'eau (1) selon l'une quelconque des revendications précédentes, **caractérisé en ce qu'**une ouverture d'évacuation (5, 7), en particulier la deuxième ouverture d'évacuation (7), est réalisée de manière à pouvoir être déplacée en hauteur, de manière préférée par rapport à une zone de fond (31) de la cuve de réception (4), l'ouverture d'évacuation (7) peut être disposée de manière particulièrement préférée en continu dans sa hauteur (32) jusqu'à une zone de fond (31) de la cuve de réception (4).

10. Dispositif d'eau (1) selon l'une quelconque des revendications 5 à 9, **caractérisé en ce que** de l'eau provenant du volume de réception (3) peut être déviée vers un lieu de sortie (9) par l'intermédiaire du premier et du deuxième système d'évacuation (6, 8) au moins par endroits par l'intermédiaire d'un tronçon de conduite d'évacuation commun (36), en particulier le tronçon de conduite d'évacuation commun (36) est disposé ou réalisé en aval d'un système de fermeture (10), en particulier en aval d'un système de fermeture (10) associé au premier système d'évacuation (6).

11. Dispositif d'eau (1) selon l'une quelconque des revendications précédentes, **caractérisé en ce que** le système de fermeture (10), en particulier un système de fermeture (10) associé au deuxième système d'évacuation (8), est disposé ou réalisé entre un lieu de sortie (9) et l'ouverture d'évacuation (5, 7), en particulier entre le lieu de sortie (9) et la deuxième ouverture d'évacuation (7), de manière préférée un moyen de fermeture (11) du système de fermeture (10) est disposé ou réalisé dans un tronçon de conduite du côté du système d'évacuation placé sous une surface au sol (38), en particulier placé sous une cuve de réception (4), dans lequel le moyen de fermeture (11) peut être ajusté de manière particulièrement préférée entre une position de fermeture et une position de déblocage au moyen d'un moyen de commande et/ou de régulation (39).

12. Dispositif d'eau (1) selon l'une quelconque des revendications précédentes, **caractérisé par** une troisième ouverture d'évacuation (43), déviant au moins temporairement de l'eau depuis une zone de montage de volume de réception de cuve vers un lieu de sortie (9), d'un troisième système d'évacuation (44), dans lequel la troisième ouverture d'évacuation (43) est disposée ou réalisée à un niveau de hauteur plus bas que la première et la deuxième ouverture d'évacuation (6, 8), en particulier la troisième ouverture d'évacuation (43) est surmontée en particulier dans l'état de montage final par un tronçon de cuve de réception.

13. Dispositif d'eau (1) selon l'une quelconque des revendications précédentes, **caractérisé en ce que** le dispositif d'eau (1) est réalisé de telle manière que celui-ci peut être emprunté au moins par endroits, en particulier en totalité, par un véhicule, en particulier par un véhicule utilitaire, l'élément de recouvrement (28) et/ou le corps de contenant (20) et/ou le premier système d'évacuation (6) et/ou le deuxième système d'évacuation (8) et/ou la cuve de réception (4) peuvent être empruntés au moins par endroits ou en totalité par un véhicule, en particulier un véhicule utilitaire, au moins dans l'état de montage final.

14. Procédé de construction d'un dispositif d'eau (1) pour la colonisation au moins temporaire d'amphibiens dans un dispositif d'eau (1) selon l'une quelconque des revendications précédentes, **caractérisé par** la construction d'une cuve de réception (4) en appliquant au moins par endroits, en particulier sur toute la surface, en couches une première couche (51), qui est formée au moins par endroits, en particulier en totalité, à partir d'un asphalte coulé.
